# EUROPEAN PATENT APPLICATION

(11) **EP 4 675 792 A2**
(43) Date of publication of application: **07.01.2026**
(21) Application number: 25216930.5
(22) Date of filing: 19.11.2024
(51) Int. Cl.: H01M 50/209

(54) **BATTERY PACK AND MANUFACTURING METHOD**

(30) Priority: 27.03.2024 CN 202420613789 U; 07.04.2024 CN 202410410864; 07.04.2024 CN 202410412419
(62) Divisional of application: 24213919.4
(71) Applicant: Zhejiang Jinko Energy Storage Co., Ltd., Jiaxing, Zhejiang (CN)
(72) Inventor: LV, Yuanfu, Jiaxing (CN); CHEN, Guochao, Jiaxing (CN); CHEN, Yuanhang, Jiaxing (CN)
(74) Representative: DREISS Patentanwälte PartG mbB

(57) **Abstract**

Battery pack and manufacturing method are provided. Battery pack includes cells contact system (CCS) assembly and cell assembly. CCS assembly includes injection molded member, vacuum-molded member, electrical connection plate, wiring harness. Injection molded member is connected to vacuum-molded member. Part of electrical connection plate is connected to injection molded member. Electrical connection plate is connected to vacuum-molded member. Wiring harness is connected to injection molded member, and further connected to electrical connection plate. Cell assembly includes battery cells electrically connected to electrical connection plate. Structural stiffness of injection molded member is greater than vacuum-molded member. Connection between injection molded member and vacuum-molded member reduces possibility of warping and deformation. Electrical connection plate mounted on vacuum-molded member is less prone to bending and deformation, and electrical connection plate is less prone to virtual electrical connection with cell. Electrical connection between electrical connector and cell has higher degree of operational reliability.

## Description

### TECHNICAL FIELD

The present disclosure relates to the technical field of batteries, and in particular to a battery pack and a manufacturing method.

### BACKGROUND

A battery pack is configured to store and release electrical energy. The battery pack includes a cells contact system (CCS) assembly and a cell assembly. The CCS assembly includes a mounting plate, a wiring harness, an electrical connection plate, and a temperature sensor. The wiring harness, the electrical connection plate, and the temperature sensor are all mounted above the mounting plate, and the cell assembly is mounted below the mounting plate. The wiring harness and the temperature sensor are both connected to the electrical connection plate, and the electrical connection plate is electrically connected to an electrode structure of a battery cell of the cell assembly.

### SUMMARY

In view of this, the present disclosure provides a battery pack and a manufacturing method. The battery pack achieves an effect of a higher degree of operational reliability of the electrical connection between the electrode structure of the battery cell and the electrical connection plate.

In a first aspect of the present disclosure, a battery pack is provided. The battery pack includes a CCS assembly and a cell assembly. The CCS assembly includes an injection molded member, a vacuum-molded member, an electrical connection plate, and a wiring harness. The injection molded member is connected to the vacuum-molded member. At least part of the electrical connection plate is connected to the injection molded member. The electrical connection plate is connected to the vacuum-molded member. The wiring harness is connected to the injection molded member. The wiring harness is further connected to the electrical connection plate. The cell assembly includes at least two battery cells. The battery cells are electrically connected to the electrical connection plate.

The vacuum-molded member serves as a main mounting structure of the CCS assembly. The vacuum-molded member is less prone to warping and deformation. The injection molded member serves as an auxiliary mounting structure of the CCS assembly. Structural stiffness of the injection molded member is greater than that of the vacuum-molded member. A connection structure between the injection molded member and the vacuum-molded member can further reduce the possibility of warping and deformation of the vacuum-molded member. Under this arrangement, the electrical connection plate mounted on the vacuum-molded member is less prone to bending and deformation, and the electrical connection plate is less prone to a virtual electrical connection with the battery cell. Correspondingly, a connection structure between the electrical connection plate and the battery cell is less prone to electric sparks. Therefore, the electrical connection between the electrical connection plate and the battery cell has a higher degree of operational reliability and the battery pack has a higher degree of safety.

In some embodiments, the injection molded member further includes a first reinforcement portion, the first reinforcement portion being respectively connected to the first body and at least part of the buckle; and the first reinforcement portion including a first section and a second section connected to each other, the first section extending along a length direction of the wiring harness, the second section being arranged along a direction perpendicular to the length direction of the wiring harness, the first section and the second section both having a plate-like structure, and the first section blocking the wiring harness.

In some embodiments, the first section is provided with a first through hole; the first body is provided with a second through hole, the second through hole being in communication with the first through hole; and a penetration direction of the first through hole is perpendicular to the first section, and a penetration direction of the second through hole is perpendicular to the penetration direction of the first through hole.

In some embodiments, the vacuum-molded member includes a mounting protrusion, the first body is provided with a first mounting hole, and the mounting protrusion passes through the first mounting hole; and an inner side wall of the first body for defining the first mounting hole is bonded or clamped to an outer side wall of the mounting protrusion.

In some embodiments, an area of a cross section of the mounting protrusion perpendicular to a protruding direction of the mounting protrusion gradually decreases along the protruding direction; and the inner side wall of the first body for defining the first mounting hole is in a shape of a track, and the outer side wall of the mounting protrusion is in a shape of a track.

In some embodiments, the outer side wall of the mounting protrusion further includes an annular limiting portion, the limiting portion abutting against a top surface of the first body to limit detachment of the mounting protrusion from the first mounting hole; and the limiting portion having a protruding structure or a recessed structure.

In some embodiments, the mounting protrusion is provided with a third through hole arranged along a protruding direction of the mounting protrusion.

In some embodiments, the vacuum-molded member includes a second body, the second body being provided with a first mounting groove, and one part of a structure of the first body is mounted in the first mounting groove; and an inner surface of the first mounting groove is bonded or clamped to the first body.

In some embodiments, the first mounting groove includes a first groove region and second groove regions, the second groove regions being arranged on two sides of the first groove region along a direction perpendicular to a length direction of the wiring harness; and the second groove region located on one side of the first groove region and the second groove region located on the other side of the first groove region are misaligned along the length direction of the wiring harness.

In some embodiments, the second body is further provided with a second mounting groove, at least part of a structure of the electrical connection plate is mounted in the second mounting groove, a space defined by the second mounting groove is in communication with a space defined by the first mounting groove, and the other part of the structure of the first body is located in the second mounting groove, so that the structure of the first body located in the second mounting groove is directly or indirectly connected to the electrical connection plate.

In some embodiments, the injection molded member includes second reinforcement portions, the second reinforcement portions being respectively connected to the first body and the vacuum-molded member; the second reinforcement portions extend along a direction perpendicular to a length direction of the wiring harness; and the second reinforcement portions are arranged respectively on two opposite sides of the first body along the length direction of the wiring harness.

In some embodiments, the second reinforcement portion located on one side of the first body and the second reinforcement portion located on the other side of the first body are misaligned along the direction perpendicular to the length direction of the wiring harness.

In some embodiments, the first body is provided with a sixth through hole, the sixth through hole being provided between the second reinforcement portion located on one side of the first body and the second reinforcement portion located on the other side of the first body; and the sixth through hole being in a shape of a rectangle or in a shape of a rectangle with rounded corners.

In some embodiments, a first connecting hole is arranged at a junction between the first body and the second reinforcement portion, the first connecting hole being used for part of the structure of the vacuum-molded member to pass through so that the injection molded member is positioned relative to the vacuum-molded member.

In some embodiments, a thickness of the second reinforcement portion is greater than or equal to that of the first body.

In some embodiments, the first body includes a first part and two second parts, the first part being connected to the buckle, and the second parts being directly or indirectly connected to the electrical connection plate; the first part including a first end and a second end arranged oppositely along a direction perpendicular to a length direction of the wiring harness, and the second parts being correspondingly connected to the first end and the second end; and the second part connected to the first end and the second part connected to the second end being misaligned in the length direction of the wiring harness.

In some embodiments, a shape of one of the second parts of a same first body is different from that of the other of the second parts.

In some embodiments, at least part of a structure of the electrical connection plate is located between the second part and the vacuum-molded member, or at least part of the structure of the electrical connection plate abuts against a surface of the second part facing away from the vacuum-molded member.

In some embodiments, the first body further includes a connecting post protruding from the second parts, the connecting post passing through the electrical connection plate so that the connecting post is riveted with the electrical connection plate.

In a second aspect of the present disclosure, a manufacturing method for manufacturing the above battery pack is provided. The method includes:
step S1: assembling all injection molded members simultaneously to a vacuum-molded member;
step S2: assembling all electrical connection plates simultaneously to the vacuum-molded member;
step S3: assembling wiring harnesses to the injection molded members;
step S4: simultaneously hot riveting all the injection molded members and the corresponding electrical connection plates;
step S5: simultaneously welding all the electrical connection plates and the corresponding wiring harnesses by laser welding or ultrasonic welding; and
step S6: simultaneously welding all the electrical connection plates and corresponding temperature sensors by laser welding or ultrasonic welding.

The manufacturing method provided in the present disclosure has higher efficiency and can manufacture more battery packs per unit time.

The order of step S1 and step S2 is not limited in the present disclosure. Step S1 may be completed first, followed by step S2, or step S2 may be completed first, followed by step S1, or step S1 and step S2 may be completed at the same time. The order of step S3 and step S4 is not limited in the embodiments of the present disclosure. Step S3 may be completed first, followed by step S4, or step S4 may be completed first, followed by step S3. In addition, step S3 and step S4 may be completed after completion of step S1 and step S2. The order of step S5 and step S6 is not limited in the present disclosure. Step S5 may be completed first, followed by step S6, or step S5 may be completed first, followed by step S6. In addition, step S5 and step S6 may be completed after completion of step S3 and step S4.

### BRIEF DESCRIPTION OF DRAWINGS

In order to more clearly illustrate the technical solutions in embodiments of the present disclosure, the accompanying drawings used in the description of the embodiments will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic diagram of an assembly structure of a CCS assembly and a cell assembly according to some embodiments of the present disclosure;
FIG. 2 is a schematic diagram of an assembly structure of the CCS assembly and the cell assembly in FIG. 1 from another perspective;
FIG. 3 is a schematic diagram of an assembly structure of the CCS assembly according to some embodiments;
FIG. 4 is a schematic structural diagram of the CCS assembly in FIG. 3 from a top view;
FIG. 5 is a schematic structural diagram of a vacuum-molded member according to some embodiments;
FIG. 6 is a partial enlarged view of Part A in FIG. 3;
FIG. 7 is a partial enlarged view of Part B in FIG. 5;
FIG. 8 is a schematic structural diagram of an electrical connection plate according to some embodiments;
FIG. 9 is a schematic structural diagram of the electrical connection plate according to some other embodiments;
FIG. 10 is a schematic structural diagram of an injection molded member according to some embodiments;
FIG. 11 is a partial cross-sectional schematic diagram of an assembly structure of the injection molded member and a protrusion according to some embodiments;
FIG. 12 is a schematic diagram of an assembly structure of a CCS assembly and a cell assembly according to some embodiments of the present disclosure;
FIG. 13 is a schematic diagram of an assembly structure of the CCS assembly according to some embodiments;
FIG. 14 is a schematic diagram of a partial structure of a vacuum-molded member according to some embodiments, in which dotted lines are structural disconnection lines;
FIG. 15 is a schematic structural diagram of an electrical connection plate according to some embodiments;
FIG. 16 is a schematic structural diagram of the electrical connection plate according to some other embodiments;
FIG. 17 is a schematic structural diagram of an injection molded member according to some embodiments, in which dotted lines are structural dividing lines;
FIG. 18 is a schematic diagram of an assembly structure of a CCS assembly and a cell assembly according to some embodiments of the present disclosure;
FIG. 19 is a schematic diagram of an assembly structure of the CCS assembly and the cell assembly in FIG. 18 from another perspective;
FIG. 20 is a schematic structural diagram of the CCS assembly according to some embodiments of the present disclosure, in which a wiring harness and a temperature sensor are not shown;
FIG. 21 is a schematic structural diagram of a wiring harness separator in FIG. 20;
FIG. 22 is a schematic structural diagram of the wiring harness separator in FIG. 21 from another perspective;
FIG. 23 is a schematic structural diagram of an electrical connector in FIG. 20;
FIG. 24 is a schematic structural diagram of another electrical connector in FIG. 20;
FIG. 25 is a schematic structural diagram of an I-shaped protrusion in FIG. 22;
FIG. 26 is a schematic structural diagram of the I-shaped protrusion in FIG. 25 from another perspective;
FIG. 27 is a schematic structural diagram of a U-shaped protrusion in FIG. 22;
FIG. 28 is a schematic structural diagram of another U-shaped protrusion in FIG. 22;
FIG. 29 is a schematic structural diagram of the U-shaped protrusion in FIG. 27 from another perspective; and
FIG. 30 is a schematic structural diagram of another U-shaped protrusion in FIG. 22.

### Reference signs:

10: CCS assembly;
   1: injection molded member;
      11: first body;
         111: first part;
            111a: second through hole;
            111b: first mounting hole;
            111c: fifth through hole;
            111d: sixth through hole;
            1111: first end;
            1112: second end;
            1113: inner side wall;
            1114: top surface;
         112: second part;
      12: buckle;
      13: first reinforcement portion;
         131: first section;
            131a: first through hole;
         132: second section;
      14: second reinforcement portion;
      15: connecting post;
      16: first connecting hole;
   2: vacuum-molded member;
      21: mounting protrusion;
         21a: third through hole;
         211: outer side wall;
            2111: limiting portion;
            2111a: cambered surface;
      22: second body;
         221: first mounting groove;
            221a: first groove region;
            221b: second groove region;
         222: second mounting groove;
            222a: fourth through hole; 23: positioning post;
   3: electrical connection plate;
      31: connecting portion;
      32: second connecting hole;
   4: wiring harness;
20: cell assembly;
   201: battery cell;
100: CCS assembly;
   10a: wiring harness separator;
      10aa: first accommodating groove;
      10ab: second accommodating groove;
      101: substrate;
         101a: pressure relief hole;
         101b: through hole;
         1011: top wall;
      102: I-shaped protrusion;
         1021: first structural section;
            1021a: first end portion;
            1021b: second end portion;
         1022: second structural section;
         1023: third structural section;
      103: U-shaped protrusion;
         103a: opening;
         1031: fourth structural section;
            1031a: third end portion;
            1031b: fourth end portion;
         1032: fifth structural section;
         1033: sixth structural section;
      104: limiting post;
   20a: electrical connector;
      201: electrical connection portion;
      202: second mounting hole;
200: cell assembly;
   2001: battery cell.

### DESCRIPTION OF EMBODIMENTS

In order to better understand the technical solution of the present disclosure, the embodiments of the present disclosure will be described in detail below with reference to the accompanying drawings.

It should be clear that the described embodiments are only some of rather than all of the embodiments of the present disclosure. All other embodiments acquired by those of ordinary skill in the art without creative efforts based on the embodiments of the present disclosure shall fall within the protection scope of the present disclosure.

The terms used in the embodiments of the present disclosure are intended only to describe particular embodiments and are not intended to limit the present disclosure. As used in the embodiments of the present disclosure and the appended claims, the singular forms of "a/an", "one", and "the" are also intended to include plural forms, unless otherwise clearly specified in the context.

It should be understood that the term "and/or" used herein merely describes an association relationship between associated objects and represents that three relationships may exist. For example, A and/or B may represent the following three cases: only A exists, both A and B exist, and only B exists. The character "/" generally indicates an "or" relationship between the associated objects.

Any one of a length direction (direction X), a width direction (direction Y), and a thickness direction (direction Z) described herein is perpendicular to the other directions.

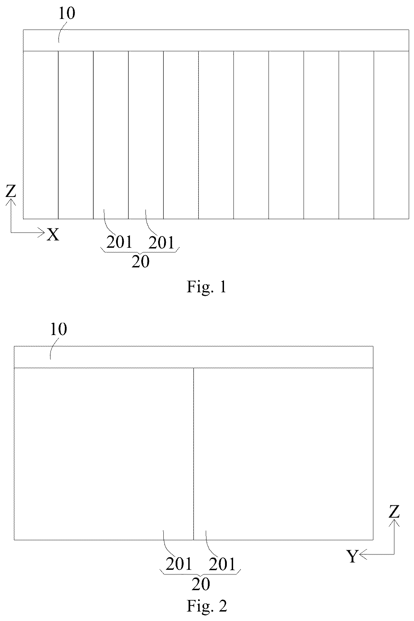

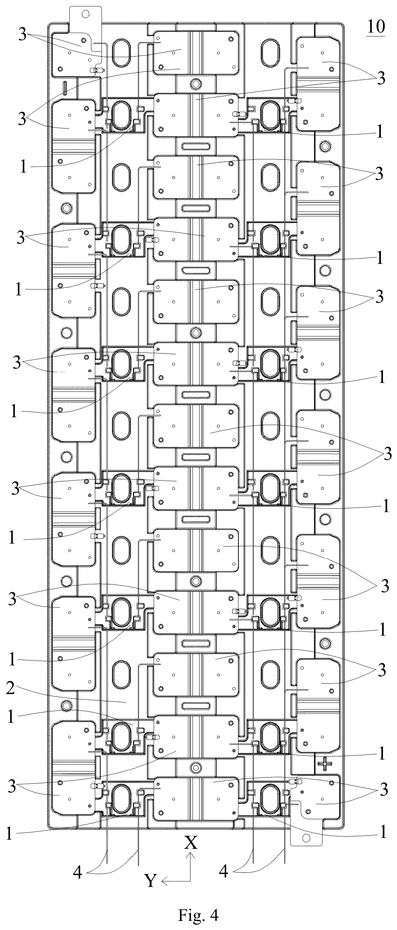

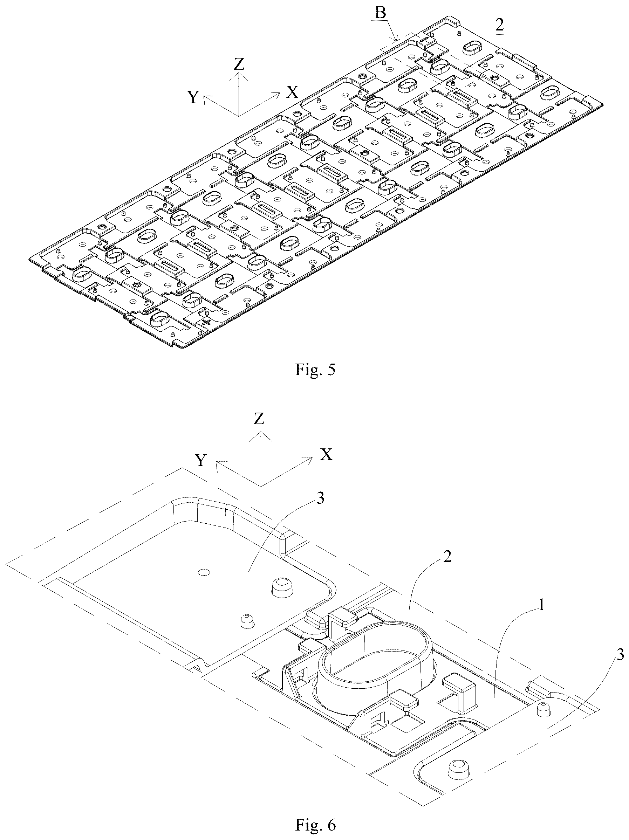

In a first aspect, some embodiments of the present disclosure provide a first battery pack (FIG. 1 to FIG. 11). Referring to FIG. 1, the battery pack includes a CCS assembly 10 and a cell assembly 20 connected to each other. The cell assembly 20 includes at least two battery cells 201. The at least two battery cells 201 are arranged along a length direction (direction X) of the CCS assembly 10. Referring to FIG. 2, at least two columns of battery cells 201 are arranged along a width direction (direction Y) of the CCS assembly 10. The CCS assembly 10 is configured to electrically connect a plurality of battery cells 201 in series or in parallel. The CCS assembly 10 can further collect electrical signals of the battery cell 201 in real time and collect temperature signals of an electrical connection plate between two battery cells 201.

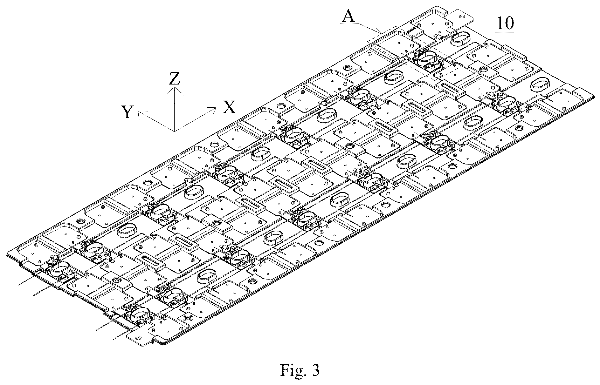

Referring to FIG. 3 to FIG. 6, the CCS assembly 10 includes injection molded members 1, a vacuum-molded member 2, electrical connection plates 3, wiring harnesses 4, and temperature sensors (not shown). The injection molded members 1 are connected to the vacuum-molded member 2, at least some of the electrical connection plates 3 are connected to the injection molded members 1, the electrical connection plates 3 are connected to the vacuum-molded member 2, the wiring harnesses 4 are connected to the injection molded members 1, and the wiring harnesses 4 are further connected to the electrical connection plates 3. One part of the wiring harnesses 4 are directly connected to the electrical connection plates 3, and the part of the wiring harnesses 4 are configured to collect current signals of the electrical connection plates 3. The other part of the wiring harnesses 4 are connected to the electrical connection plates 3 through the temperature sensors, and the part of the wiring harnesses 4 are configured to collect temperature signals of the electrical connection plates 3.

The CCS assembly 10 includes four sets of wiring harnesses 4. Each two sets of wiring harnesses 4 are connected to a same column of injection molded members 1 arranged along the direction X. One set of wiring harnesses 4 is connected to the electrical connection plates 3 located on one side of the injection molded members 1, and the other set of wiring harnesses 4 is connected to the electrical connection plates 3 located on the other side of the injection molded members 1.

In addition, part of the electrical connection plates 3 are not connected to the injection molded members 1.

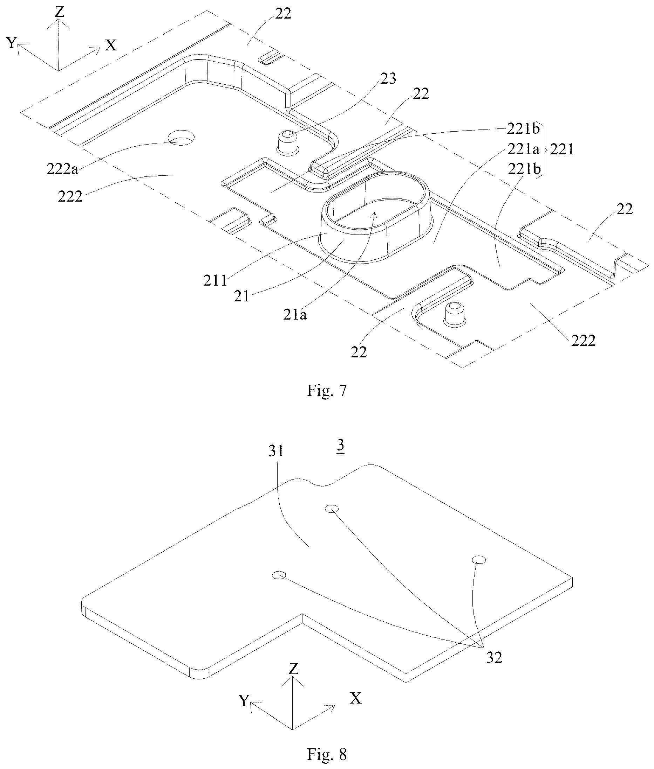

Referring to FIG. 7, the vacuum-molded member 2 is provided with a fourth through hole 222a, an electrode structure (not shown) of each battery cell 201 of the cell assembly 20 may pass through the fourth through hole 222a, so that the electrode structure of the battery cell 201 may be connected (welded and electrically connected) to the electrical connection plate 3.

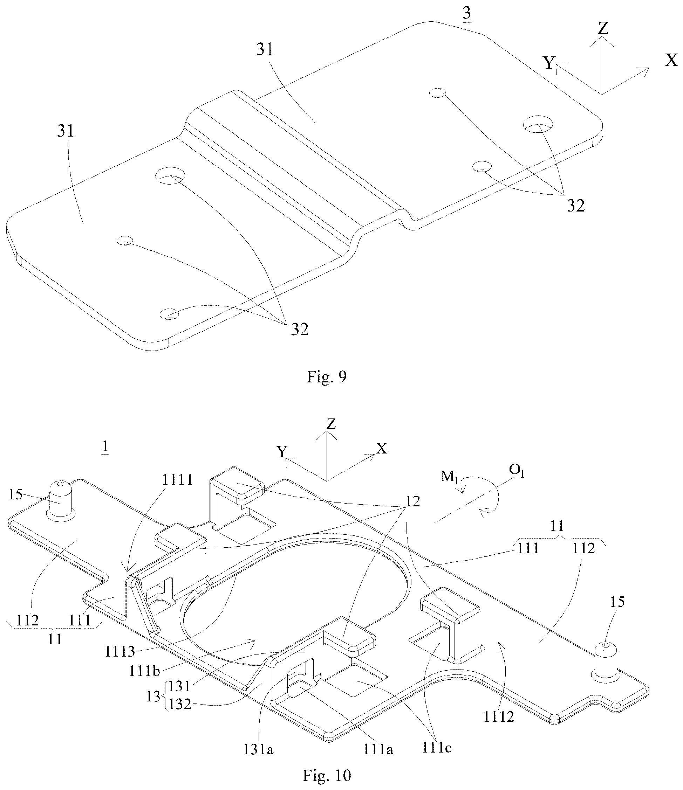

Referring to FIG. 8 to FIG. 9, the electrical connection plate 3 includes a connecting portion 31, and the connecting portion 31 is configured to be welded to the electrode structure (e.g., a positive electrode structure or a negative electrode structure) of the battery cell 201. Each battery cell 201 includes a positive electrode structure (not shown) and a negative electrode structure (not shown). The positive electrode structure is connected to the connecting portion 31 of one electrical connection plate 3, and the negative electrode structure is connected to the connecting portion 31 of another electrical connection plate 3. As shown in FIG. 8, part of the electrical connection plates 3 include a single connecting portion 31. The connecting portion 31 is configured to be connected to the positive electrode structure of the battery cell 201 arranged first in an arrangement order along the direction X. As shown in FIG. 9, part of the electrical connection plates 3 include two connecting portions 31. One connecting portion 31 is configured to be connected to the negative electrode structure of the battery cell 201 arranged first in an arrangement order along the direction X, and the other connecting portion 31 is configured to be connected to the positive electrode structure of the battery cell 201 arranged second in the arrangement order along the direction X. By analogy, the battery cells 201 arranged along the direction X are electrically connected in series through a plurality of electrical connection plates 3.

Referring to FIG. 8 to FIG. 9, each connecting portion 31 of each electrical connection plate 3 is further provided with at least three second connecting holes 32. At least one second connecting hole 32 is penetrated by the electrode structure (not shown) of the battery cell 201 so that the connecting portion 31 is connected (welded and electrically connected) to the electrode structure of the battery cell 201. At least one second connecting hole 32 is configured to be penetrated by a connecting post 15 of the injection molded member 1 so that the connecting portion 31 is connected (connected by interference fit or hot riveted) to the injection molded member 1. At least one second connecting hole 32 is configured to be penetrated by a positioning post 23 of the vacuum-molded member 2 so that the connecting portion 31 is positioned relative to the vacuum-molded member 2.

The electrical connection plate 3 is made of aluminum, copper, or iron.

The vacuum-molded member 2 serves as a main mounting structure of the CCS assembly 10. The vacuum-molded member 2 is less prone to warping and deformation. The injection molded member 1 serves as an auxiliary mounting structure of the CCS assembly 10. Structural stiffness of the injection molded member 1 is greater than that of the vacuum-molded member 2. A connection structure between the injection molded member 1 and the vacuum-molded member 2 can further reduce the possibility of warping and deformation of the vacuum-molded member 2. Under this arrangement, the electrical connection plate 3 mounted on the vacuum-molded member 2 is less prone to bending and deformation, and the electrical connection plate 3 is less prone to a virtual electrical connection with the battery cell 201. Correspondingly, a connection structure between the electrical connection plate 3 and the battery cell 201 is less prone to electric sparks. Therefore, the electrical connection between the electrical connection plate 3 and the battery cell 201 has a higher degree of operational reliability and the battery pack has a higher degree of safety.

In some embodiments, the CCS assembly 10 includes at least two injection molded members 1 arranged at intervals along a length direction (direction X) of the wiring harness 4. Under this arrangement, the vacuum-molded member 2 is less prone to warping and deformation. Next, more structures are used to connect the wiring harness 4, and the wiring harness 4 can be better arranged along the direction X.

In some embodiments, referring to FIG. 10, the injection molded member 1 includes a first body 11 and a buckle 12 connected to each other, the first body 11 is connected to the vacuum-molded member 2, and the buckle 12 is clamped to the wiring harness 4. Under this arrangement, on the one hand, a user can remove part of the wiring harnesses 4 from the injection molded member 1 or mount part of the wiring harnesses 4 on the injection molded member 1 during maintenance, so the user has less maintenance workload. On the other hand, the buckle 12 is clamped to the wiring harness 4 so that corresponding disassembly and mounting difficulty is lower.

A same injection molded member 1 includes two sets of buckles 12, and each set of buckles 12 includes two buckles 12. The two sets of buckles 12 are arranged at intervals along the direction Y. The two buckles 12 in the same set of buckles 12 are arranged at intervals along the direction X. In the same set of buckles 12, one buckle 12 limits movement of the wiring harness 4 along the direction Y, and the other buckle 12 limits movement of the wiring harness 4 along the direction opposite to the direction Y.

In addition, a structure of the buckle 12 may be L-shaped, C-shaped or U-shaped. The first body 11 is provided with a fifth through hole 111c corresponding to the buckle 12, so that the buckle 12 in the above shape can be formed by an injection molding process. Next, due to the arrangement of the fifth through hole 111c, the injection molded member 1 and the CCS assembly 10 have smaller weights. The CCS assembly 10 exerts less weight load on the cell assembly 20, and the cell assembly 20 is less likely to be crushed by the CCS assembly 10. Moreover, the battery pack has a smaller weight, and the battery pack is more easily carried, mounted, and disassembled by the user.

In some embodiments, referring to FIG. 10, the injection molded member 1 further includes a first reinforcement portion 13, and the first reinforcement portion 13 is respectively connected to the first body 11 and at least part of the buckles 12. The first reinforcement portion 13 can improve stability of a connection structure between the first body 11 and the buckle 12, so that the wiring harness 4 can be mounted on the injection molded member 1 more reliably.

In some embodiments, referring to FIG. 10, the first reinforcement portion 13 includes a first section 131 extending along the length direction (direction X) of the wiring harness 4, and the first section 131 blocks the wiring harness 4. On the one hand, the wiring harness 4 can be more neatly arranged on the CCS assembly 10 along the direction X, and on the other hand, since the wiring harness 4 may exert a force on the buckle 12 along a direction parallel to the direction Y, the first section 131 can share part of the force on the wiring harness 4 for the buckle 12, so that the connection structure between the first body 11 and the buckle 12 is less prone to breakage or deformation.

In some embodiments, referring to FIG. 10, the first section 131 has a plate structure, or the first section 131 may have a column structure.

In some embodiments, referring to FIG. 10, the first section 131 is provided with a first through hole 131a. Under this arrangement, the injection molded member 1 and the CCS assembly 10 have smaller weights, that is, the CCS assembly 10 exerts less weight load on the cell assembly 20, and the cell assembly 20 is less likely to be crushed by the CCS assembly 10. Moreover, the battery pack has a smaller weight, and the battery pack is easily carried, mounted, and disassembled by the user.

In some embodiments, referring to FIG. 10, the first body 11 is provided with a second through hole 111a, and the second through hole 111a is in communication with the first through hole 131a. Under this arrangement, the injection molded member 1 and the CCS assembly 10 have smaller weights. The CCS assembly 10 exerts less weight load on the cell assembly 20, and the cell assembly 20 is less likely to be crushed by the CCS assembly 10. Moreover, the battery pack has a smaller weight, and the battery pack is more easily carried, mounted, and disassembled by the user.

A penetration direction of the first through hole 131a is perpendicular to the plateshaped first section 131, and a penetration direction (direction Z) of the second through hole 111a is perpendicular to the penetration direction (direction Y) of the first through hole 131a. This arrangement facilitates manufacturing of the required injection molded member 1 by using the injection molding process.

In some embodiments, referring to FIG. 10, the first reinforcement portion 13 includes a second section 132 arranged along a direction (direction Y) perpendicular to the length direction (direction X) of the wiring harness 4. In other words, the second section 132 is arranged along the direction Y. Since the wiring harness 4 may exert a force on the buckle 12 along a direction parallel to the direction Y, the second section 132 arranged along the direction Y has greater bending strength, the second section 132 is less prone to deformation in the direction parallel to the direction Y, and the second section 132 can enhance stability of the connection structure between the first body 11 and the buckle 12 in the direction parallel to the direction Y.

In some embodiments, the second section 132 has a structure of a triangular plate, and the second section 132 with the structure has a higher degree of structural stability.

In some embodiments, referring to FIG. 10, the first body 11 includes a first part 111 and two second parts 112, the first part 111 is connected to the buckle 12, and the second part 112 is directly or indirectly connected to the electrical connection plate 3. The first part 111 includes a first end 1111 and a second end 1112 arranged oppositely along the direction (direction Y) perpendicular to the length direction (direction X) of the wiring harness 4. In other words, the first end 1111 and the second end 1112 are arranged oppositely along the direction Y, and the second parts 112 are correspondingly connected to the first end 1111 and the second end 1112. Correspondingly, the electrical connection plates 3 are arranged on two sides of the first body 11 in the direction Y. Thus, it can be inferred that a same injection molded member 1 may be simultaneously connected to two electrical connection plates 3 arranged oppositely along the direction Y, and the structure of the injection molded member 1 extends along the direction Y. Through this arrangement, the injection molded member 1 has better bending strength to resist a bending moment M₁ about an axis O₁. Correspondingly, the vacuum-molded member 2 connected to the injection molded member 1 also has better bending strength. That is, the vacuum-molded member 2 is less prone to bending and deformation about the axis O₁, and the electrical connection plate 3 is less prone to a virtual electrical connection with the battery cell 201.

The axis O₁ may be considered as a center line of the first part 111 along the direction X.

In some embodiments, the CCS assembly 10 includes at least two columns of injection molded members 1 arranged at intervals along the direction (direction Y) perpendicular to the length direction (direction X) of the wiring harness 4, and each column of injection molded members 1 includes at least two injection molded members 1 arranged at intervals along the length direction (direction X) of the wiring harness 4. Thus, it can be inferred that the CCS assembly 10 includes at least four columns of electrical connection plates 3 arranged at intervals along the direction (direction Y) perpendicular to the length direction (direction X) of the wiring harness 4, and each two columns of electrical connection plates 3 are configured to electrically connect at least two battery cells 201 arranged along the direction X in series. That is, the CCS assembly 10 is adapted to assemble at least two rows of battery cells 201, and the battery pack has a larger electric energy capacity.

In some embodiments, referring to FIG. 10, the second part 112 connected to the first end 1111 and the second part 112 connected to the second end 1112 are misaligned in the length direction (direction X) of the wiring harness 4. Through this arrangement, the injection molded member 1 has a structure that is not symmetrical with respect to the axis O₁, that is, the injection molded member 1 has a fool-proof function regarding assembly, which reduces a possibility of incorrect mounting of the injection molded member 1 on the vacuum-molded member 2, thereby improving operational reliability of the CCS assembly 10 and the battery pack.

In some embodiments, referring to FIG. 10, in a same first body 11, one second part 112 has a different shape than the other second part 112. Through this arrangement, the injection molded member 1 has a structure that is more obviously not symmetrical with respect to the axis O₁, and the injection molded member 1 has a better fool-proof function regarding assembly, so that there is a lower possibility that the injection molded member 1 is incorrectly mounted on the vacuum-molded member 2, and the CCS assembly 10 and the battery pack have a higher degree of operational reliability.

One second part 112 in the same first body 11 may be in a shape of a rectangle, and the other second part 112 in the same first body 11 may be in a shape of a stair. Certainly, the second part 112 may alternatively be in other shapes.

In some embodiments, at least part of the structure of the electrical connection plate 3 is located between the second part 112 and the vacuum-molded member 2. Under this arrangement, movement of the electrical connection plate 3 along a direction parallel to the direction Z is limited by the second part 112 and the vacuum-molded member 2, and the connection structure between the electrical connection plate 3 and the battery cell 201 has a higher degree of reliability.

In some embodiments, at least part of the structure of the electrical connection plate 3 abuts against a surface of the second part 112 facing away from the vacuum-molded member 2. Under this arrangement, movement of the injection molded member 1 along the direction parallel to the direction Z is limited by the electrical connection plate 3 and the vacuum-molded member 2, and the injection molded member 1 can limit the wiring harness 4 more reliably, thereby improving reliability of the connection structure between the wiring harness 4 and the electrical connection plate 3.

In some embodiments, stiffness of the second part 112 is greater than that of the first part 111, and a ratio of the stiffness of the second part 112 to the stiffness of the first part 111 ranges from 1.1 to 2. The ratio may be, for example, 1.1, 1.2, 1.3, 1.4, 1.5, 1.6, 1.7, 1.9, or 2.0. Under this arrangement, a connection structure between the second part 112 and the electrical connection plate 3 has better operational reliability.

The stiffness is used to represent a capability to resist deformation.

In some embodiments, strength of the second part 112 is greater than that of the first part 111, and a ratio of the strength of the second part 112 to the strength of the first part 111 ranges from 1.1 to 2. The ratio may be, for example, 1.1, 1.2, 1.3, 1.4, 1.5, 1.6, 1.7, 1.9, or 2.0. Under this arrangement, the connection structure between the second part 112 and the electrical connection plate 3 has better operational reliability.

The strength is used to represent a capability to resist breakage.

In some embodiments, a thickness of the first part 111 and a thickness of the second part 112 are different.

If the thickness of the first part 111 is greater than the thickness of the second part 112, the second part 112 may avoid one part of structure members of the battery pack in the direction Z. Correspondingly, a ratio of the thickness of the first part 111 to the thickness of the second part 112 ranges from 1.1 to 2. The ratio may be, for example, 1.1, 1.2, 1.3, 1.4, 1.5, 1.6, 1.7, 1.9, or 2.0.

If the thickness of the second part 112 is greater than the thickness of the first part 111, the first part 111 may avoid the other part of the structure members of the battery pack in the direction Z. Correspondingly, a ratio of the thickness of the second part 112 to the thickness of the first part 111 ranges from 1.1 to 2. The ratio may be, for example, 1.1, 1.2, 1.3, 1.4, 1.5, 1.6, 1.7, 1.9, or 2.0.

In some embodiments, referring to FIG. 10, the injection molded member 1 further includes a connecting post 15 protruding from the second part 112, and the connecting post 15 passes through the second connecting hole 32 of the electrical connection plate 3 so that the connecting post 15 is riveted with the electrical connection plate 3. In detail, the connecting post 15 is hot riveted with the electrical connection plate 3.

In other embodiments (not shown), the second part 112 may be directly connected to (e.g., clamped or bonded to) the electrical connection plate 3.

In some embodiments, referring to FIG. 7, the vacuum-molded member 2 includes a mounting protrusion 21, the injection molded member 1 is provided with a first mounting hole 111b, the mounting protrusion 21 passes through the first mounting hole 111b, and an inner side wall 1113 of the injection molded member 1 for defining the first mounting hole 111b is bonded or clamped to an outer side wall 211 of the mounting protrusion 21. Under this arrangement, the connection between the vacuum-molded member 2 and the injection molded member 1 has a higher degree of reliability.

The first mounting hole 111b is provided in the first body 11 of the injection molded member 1.

In addition, the buckles 12 are arranged on two sides of the first mounting hole 111b along the direction Y.

Moreover, the clamping between the inner side wall 1113 and the outer side wall 211 may include a structural limiting connection or an interference fit connection.

In addition, the number of the mounting protrusion 21 corresponds to the number of the injection molded member 1.

In some embodiments, referring to FIG. 7, the inner side wall 1113 of the injection molded member 1 for defining the first mounting hole 111b is in a shape of a track, and the outer side wall 211 of the mounting protrusion 21 is in a shape of a track. Under this arrangement, the injection molded member 1 is less prone to rotation around an axis parallel to the direction Z relative to the vacuum-molded member 2.

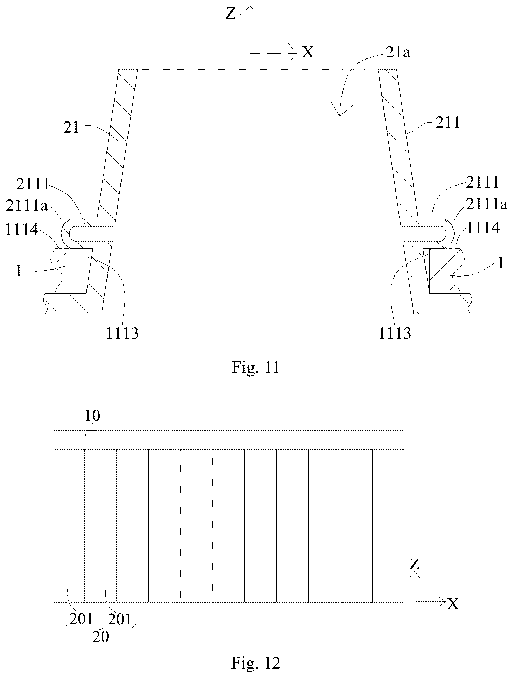

In some embodiments, referring to FIG. 11, an area of a cross section of the mounting protrusion 21 perpendicular to a protruding direction (direction Z) of the mounting protrusion 21 gradually decreases along the protruding direction (direction Z). Under this arrangement, the outer side wall 211 of the mounting protrusion 21 serves as a guide slope, and when the inner side wall 1113 of the injection molded member 1 for defining the first mounting hole 111b abuts against the outer side wall 211 of the mounting protrusion 21, the outer side wall 211 of the mounting protrusion 21 may guide the injection molded member 1 to approach the vacuum-molded member 2 to a correct mounting position.

In some embodiments, referring to FIG. 11, the outer side wall 211 of the mounting protrusion 21 further includes an annular limiting portion 2111, and the limiting portion 2111 abuts against a top surface 1114 of the injection molded member 1 to limit detachment of the mounting protrusion 21 from the first mounting hole 111b. According to the arrangement in the embodiments, the reliability of the connection between the injection molded member 1 and the vacuum-molded member 2 can be further improved.

In some embodiments, the limiting portion 2111 has a protruding structure or a recessed structure. The two structures can satisfy the above arrangement of "the limiting portion 2111 abuts against a top surface 1114 of the injection molded member 1".

In some embodiments, referring to FIG. 11, a surface of the limiting portion 2111 includes a cambered surface 2111a. Through the arrangement, when the user assembles the injection molded member 1 and the vacuum-molded member 2, the inner side wall 1113 of the injection molded member 1 for defining the first mounting hole 111b and the cambered surface 2111a of the limiting portion 2111 can slide relatively smoothly relative to each other, thereby facilitating the user to assemble the injection molded member 1 and the vacuum-molded member 2 more smoothly. Similarly, through the arrangement, when the user disassembles the injection molded member 1 and the vacuum-molded member 2, the inner side wall 1113 of the injection molded member 1 for defining the first mounting hole 111b and the cambered surface 2111a of the limiting portion 2111 can slide relatively smoothly relative to each other, thereby facilitating the user to disassemble the injection molded member 1 and the vacuum-molded member 2 more smoothly.

In some embodiments, referring to FIG. 7, the mounting protrusion 21 is provided with a third through hole 21a arranged along the protruding direction (direction Z) of the mounting protrusion 21. The third through hole 21a serves as a pressure relief hole. The third through hole 21a is used for electrolyte of the battery cell 201 in a thermal runaway state to pass through, so as to reduce a possibility of explosion inside the battery cell 201 due to incapability to release the electrolyte quickly.

In some embodiments, referring to FIG. 7, the vacuum-molded member 2 includes a second body 22, the second body 22 is provided with a first mounting groove 221, and one part of a structure of the injection molded member 1 is mounted in the first mounting groove 221. Under this arrangement, an assembly structure of the vacuum-molded member 2 and the injection molded member 1 is relatively compact, a dimension of the CCS assembly 10 along the direction Z is smaller, and the CCS assembly 10 occupies less space in the battery pack. Correspondingly, a volume of the cell assembly 20 can be designed to be larger, and the cell assembly 20 can store more electrical energy.

The first mounting groove 221 includes a first groove region 221a and a second groove region 221b, the first groove region 221a is configured to mount the first part 111, and the second groove region 221b is configured to mount part of the structure of the second part 112.

In addition, the same first mounting groove 221 may include two second groove regions 221b. In detail, the second groove regions 221b are arranged on two sides of the first groove region 221a along the direction (direction Y) perpendicular to the length direction (direction X) of the wiring harness 4. The second groove region 221b located on one side of the first groove region 221a and the second groove region 221b located on the other side of the first groove region 221a are misaligned along the length direction (direction X) of the wiring harness 4. A shape of one second groove region 221b matches the shape of the second part 112 connected to the first end 1111, and the shape of the other second groove region 221b matches the shape of the second part 112 connected to the second end 1112, that is, the first mounting groove 221 has a better fool-proof function regarding assembly, which reduces a possibility of incorrect mounting of the injection molded member 1 on the vacuum-molded member 2, thereby improving operational reliability of the CCS assembly 10 and the battery pack.

In some embodiments, an inner surface of the first mounting groove 221 is bonded or clamped to the injection molded member 1.

In some embodiments, referring to FIG. 7, the second body 22 is further provided with a second mounting groove 222, at least part of the structure of the electrical connection plate 3 is mounted in the second mounting groove 222, a space defined by the second mounting groove 222 is in communication with a space defined by the first mounting groove 221, and the other part of the structure of the injection molded member 1 is located in the second mounting groove 222, so that the structure of the injection molded member 1 located in the second mounting groove 222 is directly or indirectly connected to the electrical connection plate 3.

The second part 112 of the injection molded member 1 extends from the second groove region 221b of the first mounting groove 221 to the second mounting groove 222.

In some embodiments, the vacuum-molded member 2 is located between the injection molded member 1 and the cell assembly 20. Correspondingly, the electrical connection plate 3 is located on a side of the vacuum-molded member 2 facing away from the cell assembly 20, so as to meet a requirement of the injection molded member 1 and the wiring harness 4 and the electrical connection plate 3 that are connected to the injection molded member 1 to avoid the cell assembly 20.

In other embodiments, at least part of the structure of the injection molded member 1 may alternatively be located on a side of the vacuum-molded member 2 facing the cell assembly 20. For example, the first body 11 is located on the side of the vacuum-molded member 2 facing the cell assembly 20, and the buckle 12 is located on a side of the first body 11 facing away from the cell assembly 20, or the buckle 12 is located on a side of the first body 11 facing the cell assembly 20. Further, the buckle 12 may be located between the first body 11 and the vacuum-molded member 2, and the electrical connection plate 3 and the wiring harness 4 are both located on the side of the vacuum-molded member 2 facing the cell assembly 20. Under this arrangement, the vacuum-molded member 2 is not required to be provided with a fourth through hole 222a for the electrode structure of the cell assembly 20 to pass through, and it is simpler and easier to manufacture the structure of the vacuum-molded member 2. Next, the electrical connection plate 3 is closer to the main structure of the cell assembly 20, a dimension of the electrode structure of the battery cell 201 of the cell assembly 20 along the direction Z is shorter, the saved space can make the volume of the main structure of the battery cell 201 larger, and the battery cell 201 can store more electrical energy. Alternatively, the buckle 12 may pass through the vacuum-molded member 2, so that part of the structure of the buckle 12 is located on the side of the vacuum-molded member 2 facing away from the cell assembly 20, and the electrical connection plate 3 and the wiring harness 4 are both located on the side of the vacuum-molded member 2 facing away from the cell assembly 20. This arrangement facilitates the user to replace the electrical connection plate 3 and the wiring harness 4.

In some embodiments, a surface of the first body 11 facing the cell assembly 20 (a bottom surface of the first body 11) is flush with a surface of the vacuum-molded member 2 facing the cell assembly 20 (a bottom surface of the vacuum-molded member 2).

In some embodiments, the surface of the first body 11 facing the cell assembly 20 (the bottom surface of the first body 11) is closer to the cell assembly 20 than the surface of the vacuum-molded member 2 facing the cell assembly 20 (the bottom surface of the vacuum-molded member 2). Under this arrangement, the vacuum-molded member 2 can avoid part of the structure of the cell assembly 20.

In some embodiments, the surface of the vacuum-molded member 2 facing the cell assembly 20 (the bottom surface of the vacuum-molded member 2) is closer to the cell assembly 20 than the surface of the first body 11 facing the cell assembly 20 (the bottom surface of the first body 11). Under this arrangement, the first body 11 can avoid part of the structure of the cell assembly 20.

In a second aspect, some embodiments of the present disclosure provide a second battery pack (FIG. 12 to FIG. 17). Referring to FIG. 12, the battery pack includes a CCS assembly 10 and a cell assembly 20 connected to each other. The cell assembly 20 includes at least two battery cells 201. The CCS assembly 10 is configured to electrically connect a plurality of battery cells 201 in series. The CCS assembly 10 can further collect electrical signals of the battery cell 201 in real time and collect temperature signals of an electrical connection plate between two battery cells 201.

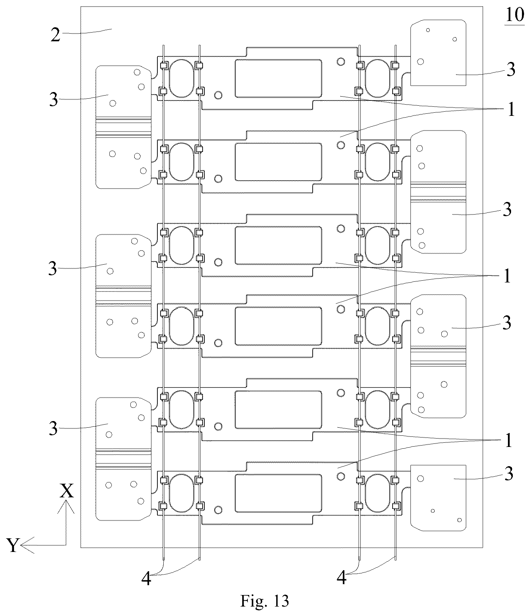

Referring to FIG. 13, the CCS assembly 10 includes injection molded members 1, a vacuum-molded member 2, electrical connection plates 3, wiring harnesses 4, and temperature sensors (not shown). The injection molded members 1 are connected to the vacuum-molded member 2, at least some of the electrical connection plates 3 are connected to the injection molded members 1, the electrical connection plates 3 are connected to the vacuum-molded member 2, the wiring harnesses 4 are connected to the injection molded members 1, and the wiring harnesses 4 are further connected to the electrical connection plates 3. One part of the wiring harnesses 4 are directly connected to the electrical connection plates 3, and the part of the wiring harnesses 4 are configured to collect current signals of the electrical connection plates 3. The other part of the wiring harnesses 4 are connected to the electrical connection plates 3 through the temperature sensors, and the part of the wiring harnesses 4 are configured to collect temperature signals of the electrical connection plates 3.

The CCS assembly 10 includes four sets of wiring harnesses 4. The four sets of wiring harnesses 4 are connected to a same column of injection molded members 1 arranged along the direction X. Two sets of wiring harnesses 4 are connected to the electrical connection plates 3 located on one side of the injection molded members 1, and the other two set of wiring harnesses 4 are connected to the electrical connection plates 3 located on the other side of the injection molded members 1.

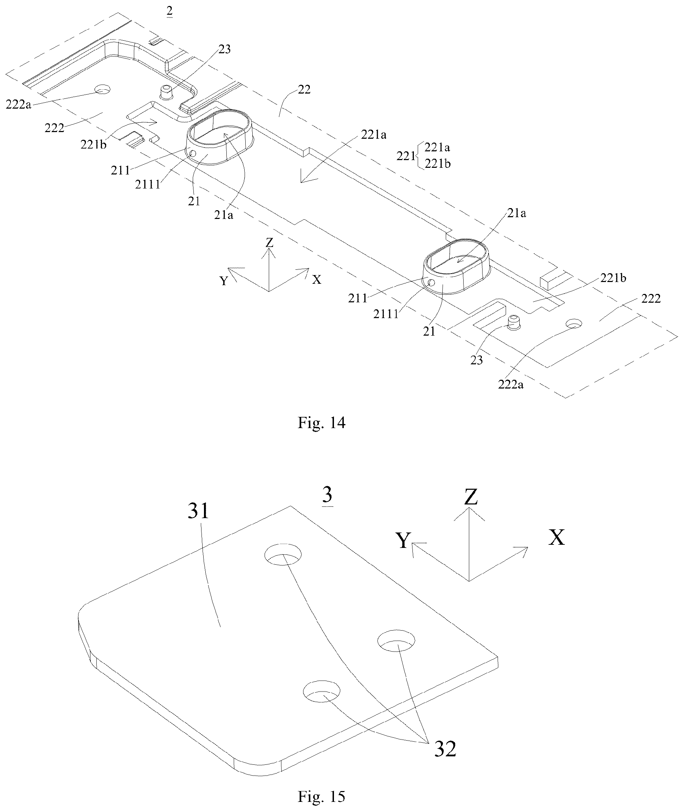

Referring to FIG. 14, the vacuum-molded member 2 is provided with a fourth through hole 222a, an electrode structure (not shown) of each battery cell 201 of the cell assembly 20 may pass through the fourth through hole 222a, so that the electrode structure of the battery cell 201 may be connected (welded and electrically connected) to the electrical connection plate 3.

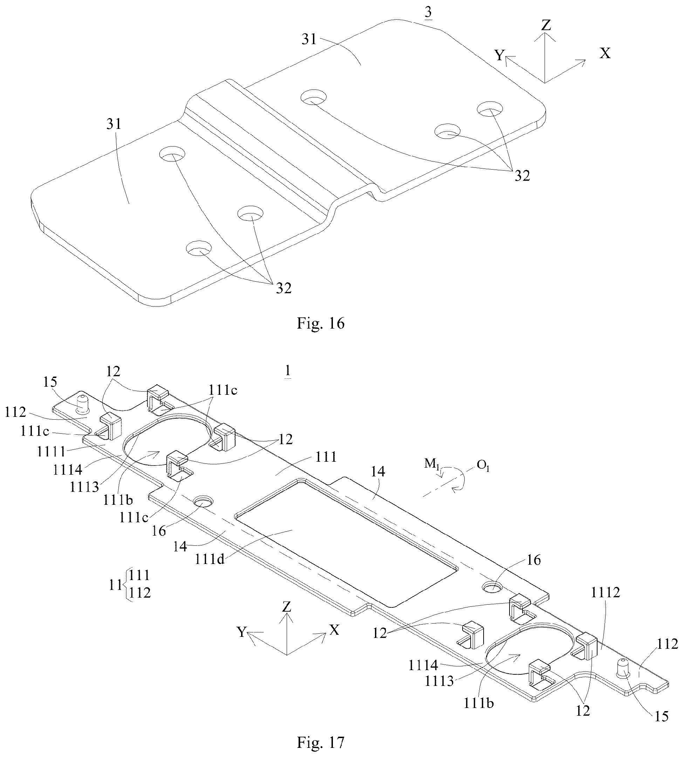

Referring to FIG. 15 to FIG. 16, the electrical connection plate 3 includes a connecting portion 31, and the connecting portion 31 is configured to be welded to the electrode structure (e.g., a positive electrode structure or a negative electrode structure) of the battery cell 201. Each battery cell 201 includes a positive electrode structure (not shown) and a negative electrode structure (not shown). The positive electrode structure is connected to the connecting portion 31 of one electrical connection plate 3, and the negative electrode structure is connected to the connecting portion 31 of another electrical connection plate 3. As shown in FIG. 15, part of the electrical connection plates 3 include a single connecting portion 31. The connecting portion 31 is configured to be connected to the positive electrode structure of the battery cell 201 arranged first in an arrangement order along the direction X. As shown in FIG. 16, part of the electrical connection plates 3 include two connecting portions 31. One connecting portion 31 is configured to be connected to the negative electrode structure of the battery cell 201 arranged first in an arrangement order along the direction X, and the other connecting portion 31 is configured to be connected to the positive electrode structure of the battery cell 201 arranged second in the arrangement order along the direction X. By analogy, the battery cells 201 arranged along the direction X are electrically connected in series through a plurality of electrical connection plates 3.

Referring to FIG. 15 to FIG. 16, each connecting portion 31 of each electrical connection plate 3 is further provided with at least three second connecting holes 32. At least one second connecting hole 32 is penetrated by the electrode structure (not shown) of the battery cell 201 so that the connecting portion 31 is connected (welded and electrically connected) to the electrode structure of the battery cell 201. At least one second connecting hole 32 is configured to be penetrated by a connecting post 15 of the injection molded member 1 so that the connecting portion 31 is connected (connected by interference fit or hot riveted) to the injection molded member 1. At least one second connecting hole 32 is configured to be penetrated by a positioning post 23 of the vacuum-molded member 2 so that the connecting portion 31 is positioned relative to the vacuum-molded member 2.

The electrical connection plate 3 is made of aluminum, copper, or iron.

The vacuum-molded member 2 serves as a main mounting structure of the CCS assembly 10. The vacuum-molded member 2 is less prone to warping and deformation. The injection molded member 1 serves as an auxiliary mounting structure of the CCS assembly 10. Structural stiffness of the injection molded member 1 is greater than that of the vacuum-molded member 2. A connection structure between the injection molded member 1 and the vacuum-molded member 2 can further reduce the possibility of warping and deformation of the vacuum-molded member 2. Under this arrangement, the electrical connection plate 3 mounted on the vacuum-molded member 2 is less prone to bending and deformation, and the electrical connection plate 3 is less prone to a virtual electrical connection with the battery cell 201. Correspondingly, a connection structure between the electrical connection plate 3 and the battery cell 201 is less prone to electric sparks. Therefore, the electrical connection between the electrical connector 2 and the battery cell 201 has a higher degree of operational reliability and the battery pack has a higher degree of safety.

In some embodiments, the CCS assembly 10 includes at least two injection molded members 1 arranged at intervals along a length direction (direction X) of the wiring harness 4. Under this arrangement, the vacuum-molded member 2 is less prone to warping and deformation. Next, more structures are used to connect the wiring harness 4, and the wiring harness 4 can be better arranged along the direction X.

In some embodiments, referring to FIG. 17, the injection molded member 1 includes a first body 11 and a buckle 12 connected to each other, the first body 11 is connected to the vacuum-molded member 2, and the buckle 12 is clamped to the wiring harness 4. Under this arrangement, on the one hand, the user can remove part of the wiring harnesses 4 from the injection molded member 1 or mount part of the wiring harnesses 4 on the injection molded member 1 during maintenance, so the user has less maintenance workload. On the other hand, the buckle 12 is clamped to the wiring harness 4 so that corresponding disassembly and mounting difficulty is lower.

A same injection molded member 1 includes four sets of buckles 12, and each set of buckles 12 includes two buckles 12. The four sets of buckles 12 are arranged at intervals along the direction Y. The two buckles 12 in the same set of buckles 12 are arranged at intervals along the direction X. In the same set of buckles 12, one buckle 12 limits movement of the wiring harness 4 along the direction Y, and the other buckle 12 limits movement of the wiring harness 4 along the direction opposite to the direction Y.

In addition, a structure of the buckle 12 may be L-shaped, C-shaped or U-shaped. The first body 11 is provided with a fifth through hole 111c corresponding to the buckle 12, so that the buckle 12 in the above shape can be formed by an injection molding process. Next, due to the arrangement of the fifth through hole 111c, the injection molded member 1 and the CCS assembly 10 have smaller weights. The CCS assembly 10 exerts less weight load on the cell assembly 20, and the cell assembly 20 is less likely to be crushed by the CCS assembly 10. Moreover, the battery pack has a smaller weight, and the battery pack is more easily carried, mounted, and disassembled by the user.

In some embodiments, referring to FIG. 17, the injection molded member 1 further includes a second reinforcement portion 14, the second reinforcement portion 14 is connected to the first body 11 and the vacuum-molded member 2 respectively, and the second reinforcement portion 14 extends along the direction (direction Y) perpendicular to the length direction (direction X) of the wiring harness 4. That is, the second reinforcement portion 14 is arranged along the direction Y. Under this arrangement, the injection molded member 1 has better bending strength to resist a bending moment M₁ about an axis O₁. Correspondingly, the vacuum-molded member 2 connected to the injection molded member 1 also has better bending strength. That is, the vacuum-molded member 2 is less prone to bending and deformation about the axis O₁, and the electrical connection plate 3 is less prone to a virtual electrical connection with the battery cell 201.

In some embodiments, referring to FIG. 17, the second reinforcement portions 14 are arranged respectively on two opposite sides of the first body 11 along the length direction (direction X) of the wiring harness 4. Under this arrangement, the injection molded member 1 has greater bending strength.

In some embodiments, referring to FIG. 17, the second reinforcement portion 14 located on one side of the first body 11 and the second reinforcement portion 14 located on the other side of the first body 11 are misaligned along the direction (direction Y) perpendicular to the length direction (direction X) of the wiring harness 4. Under this arrangement, the length of the second reinforcement portion 14 on either side may be relatively short, which can improve the bending strength of the injection molded member 1 and can also avoid necessary structures in the vacuum-molded member 2 and the electrical connection plate 3, so that the CCS assembly 10 has a higher degree of structural compactness, the CCS assembly 10 occupies less space in the battery pack, and the cell assembly 20 has a relatively larger size, thereby allowing the battery pack to store more electrical energy.

In some embodiments, referring to FIG. 17, the first body 11 is provided with a sixth through hole 111d, and the sixth through hole 111d is provided between the second reinforcement portion 14 located on one side of the first body 11 and the second reinforcement portion 14 located on the other side of the first body 11. Under this arrangement, the injection molded member 1 and the CCS assembly 10 have smaller weights. The CCS assembly 10 exerts less weight load on the cell assembly 20, and the cell assembly 20 is less likely to be crushed by the CCS assembly 10. Moreover, the battery pack has a smaller weight, and the battery pack is more easily carried, mounted, and disassembled by the user.

In some embodiments, referring to FIG. 17, the sixth through hole 111d is in a shape of a rectangle or in a shape of a rectangle with rounded corners. The arrangement of the shape of the rectangle with rounded corners reduces stress concentration on a side wall of the first body 11 for defining the sixth through hole 111d, and the structure of the first body 11 is less likely to have structural problems such as cracking or breakage.

In some embodiments, referring to FIG. 17, a first connecting hole 16 is arranged at a junction between the first body 11 and the second reinforcement portion 14, and the first connecting hole 16 is used for part of the structure of the vacuum-molded member 2 (e.g., a limiting post (not shown) protruding along the direction Z) to pass through so that the injection molded member 1 is positioned relative to the vacuum-molded member 2. Under this arrangement, the injection molded member 1 is not easy to move arbitrarily relative to the vacuum-molded member 2, and the electrical connection plate 3 and the wiring harness 4 connected to the injection molded member 1 are relatively fixed relative to the vacuum-molded member 2. That is, the CCS assembly 10 has a higher degree of operational reliability.

In some embodiments, a thickness of the second reinforcement portion 14 (a dimension along the direction Z) is greater than or equal to that of the first body 11 (a dimension along the direction Z).

If the thickness of the second reinforcement portion 14 (the dimension along the direction Z) is greater than that of the first body 11 (the dimension along the direction Z), the injection molded member 1 has greater bending strength. A ratio of the thickness of the second reinforcement portion 14 (the dimension along the direction Z) to the thickness of the first body 11 (the dimension along the direction Z) ranges from 1.1 to 2. The ratio may be, for example, 1.1, 1.2, 1.3, 1.4, 1.5, 1.6, 1.7, 1.8, 1.9, or 2.0.

In some embodiments, referring to FIG. 17, the first body 11 includes a first part 111 and two second parts 112, the first part 111 is connected to the buckle 12, and the second part 112 is directly or indirectly connected to the electrical connection plate 3. The first part 111 includes a first end 1111 and a second end 1112 arranged oppositely along the direction (direction Y) perpendicular to the length direction (direction X) of the wiring harness 4. In other words, the first end 1111 and the second end 1112 are arranged oppositely along the direction Y, and the second parts 112 are correspondingly connected to the first end 1111 and the second end 1112. Correspondingly, the electrical connection plates 3 are arranged on two sides of the first body 11 in the direction Y. Thus, it can be inferred that a same injection molded member 1 may be simultaneously connected to two electrical connection plates 3 arranged oppositely along the direction Y, and the structure of the injection molded member 1 extends along the direction Y. Through this arrangement, the injection molded member 1 has better bending strength to resist a bending moment M₁ about an axis O₁. Correspondingly, the vacuum-molded member 2 connected to the injection molded member 1 also has better bending strength. That is, the vacuum-molded member 2 is less prone to bending and deformation about the axis O₁, and the electrical connection plate 3 is less prone to a virtual electrical connection with the battery cell 201.

The axis O₁ may be considered as a center line of the first part 111 along the direction X.

In some embodiments, referring to FIG. 17, the second part 112 connected to the first end 1111 and the second part 112 connected to the second end 1112 are misaligned in the length direction (direction X) of the wiring harness 4. Through this arrangement, the injection molded member 1 has a structure that is not symmetrical with respect to the axis O₁, that is, the injection molded member 1 has a fool-proof function regarding assembly, which reduces a possibility of incorrect mounting of the injection molded member 1 on the vacuum-molded member 2, thereby improving operational reliability of the CCS assembly 10 and the battery pack.

In some embodiments, referring to FIG. 17, in a same first body 11, one second part 112 has a different shape than the other second part 112. Through this arrangement, the injection molded member 1 has a structure that is more obviously not symmetrical with respect to the axis O₁, and the injection molded member 1 has a better fool-proof function regarding assembly, so that there is a lower possibility that the injection molded member 1 is incorrectly mounted on the vacuum-molded member 2 and the CCS assembly 10 and the battery pack have a higher degree of operational reliability.

One second part 112 in the same first body 11 may be in a shape of a rectangle, and the other second part 112 in the same first body 11 may be in a shape of a stair. Certainly, the second part 112 may alternatively be in other shapes.

In some embodiments, at least part of the structure of the electrical connection plate 3 is located between the second part 112 and the vacuum-molded member 2. Under this arrangement, movement of the electrical connection plate 3 along the direction parallel to the direction Z is limited by the second part 112 and the vacuum-molded member 2, and the connection structure between the electrical connection plate 3 and the battery cell 201 has a higher degree of reliability.

In some embodiments, at least part of the structure of the electrical connection plate 3 abuts against a surface of the second part 112 facing away from the vacuum-molded member 2. Under this arrangement, movement of the injection molded member 1 along the direction parallel to the direction Z is limited by the electrical connection plate 3 and the vacuum-molded member 2, and the injection molded member 1 can limit the wiring harness 4 more reliably, thereby improving reliability of the connection structure between the wiring harness 4 and the electrical connection plate 3.

In some embodiments, stiffness of the second part 112 is greater than that of the first part 111, and a ratio of the stiffness of the second part 112 to the stiffness of the first part 111 ranges from 1.1 to 2.5. The ratio may be, for example, 1.1, 1.2, 1.3, 1.4, 1.5, 1.6, 1.7, 1.9, 2.0, 2.1, 2.2, 2.3, 2.4, or 2.5. Under this arrangement, a connection structure between the second part 112 and the electrical connection plate 3 has better operational reliability.

The stiffness is used to represent a capability to resist deformation.

In some embodiments, strength of the second part 112 is greater than that of the first part 111, and a ratio of the strength of the second part 112 to the strength of the first part 111 ranges from 1.1 to 2. The ratio may be, for example, 1.1, 1.2, 1.3, 1.4, 1.5, 1.6, 1.7, 1.9, 2.0, 2.1, 2.2, 2.3, 2.4, or 2.5. Under this arrangement, the connection structure between the second part 112 and the electrical connection plate 3 has better operational reliability.

The strength is used to represent a capability to resist breakage.

In some embodiments, referring to FIG. 17, a thickness of the first part 111 and a thickness of the second part 112 are different.

If the thickness of the first part 111 is greater than the thickness of the second part 112, the second part 112 may avoid one part of structure members of the battery pack in the direction Z. Correspondingly, a ratio of the thickness of the first part 111 to the thickness of the second part 112 ranges from 1.1 to 2. The ratio may be, for example, 1.1, 1.2, 1.3, 1.4, 1.5, 1.6, 1.7, 1.9, 2.0, 2.1, 2.2, 2.3, 2.4, or 2.5.

If the thickness of the second part 112 is greater than the thickness of the first part 111, the first part 111 may avoid the other part of the structure members of the battery pack in the direction Z. Correspondingly, a ratio of the thickness of the second part 112 to the thickness of the first part 111 ranges from 1.1 to 2. The ratio may be, for example, 1.1, 1.2, 1.3, 1.4, 1.5, 1.6, 1.7, 1.9, 2.0, 2.1, 2.2, 2.3, 2.4, or 2.5.

In some embodiments, referring to FIG. 17, the injection molded member 1 further includes a connecting post 15 protruding from the second part 112, and the connecting post 15 passes through the second connecting hole 32 of the electrical connection plate 3 so that the connecting post 15 is riveted with the electrical connection plate 3. In detail, the connecting post 15 is hot riveted with the electrical connection plate 3.

In other embodiments (not shown), the second part 112 may be directly connected to (e.g., clamped or bonded to) the electrical connection plate 3.

In some embodiments, referring to FIG. 14, the vacuum-molded member 2 includes a mounting protrusion 21. Referring to FIG. 17, the injection molded member 1 is provided with a first mounting hole 111b, the mounting protrusion 21 passes through the first mounting hole 111b, and an inner side wall 1113 of the injection molded member 1 for defining the first mounting hole 111b is bonded or clamped to an outer side wall 211 of the mounting protrusion 21. Under this arrangement, the connection between the vacuum-molded member 2 and the injection molded member 1 has a higher degree of reliability.

The first mounting hole 111b is provided in the first body 11 of the injection molded member 1.

In addition, the buckles 12 are arranged on two sides of the first mounting hole 111b along the direction Y.

Moreover, referring to FIG. 14, the vacuum-molded member 2 may include at least two pairs of mounting protrusions 21, the at least two pairs of mounting protrusions 21 are arranged at intervals along the direction X, and two mounting protrusions 21 in each pair of mounting protrusions 21 are arranged at intervals along the direction Y. Correspondingly, each injection molded member 1 is provided with two first mounting holes 111b arranged at intervals along the direction Y, and each pair of mounting protrusions 21 is connected to a same injection molded member 1.

In addition, the clamping between the inner side wall 1113 and the outer side wall 211 may include a structural limiting connection or an interference fit connection.

In some embodiments, referring to FIG. 17, the inner side wall 1113 of the injection molded member 1 for defining the first mounting hole 111b is in a shape of a track, and the outer side wall 211 of the mounting protrusion 21 is in a shape of a track. Under this arrangement, the injection molded member 1 is less prone to rotation around an axis parallel to the direction Z relative to the vacuum-molded member 2.

In some embodiments, referring to FIG. 14, the outer side wall 211 of the mounting protrusion 21 further includes at least two symmetrically arranged limiting portions 2111, and the limiting portion 2111 abuts against a top surface 1114 of the injection molded member 1 to limit detachment of the mounting protrusion 21 from the first mounting hole 111b. According to the arrangement in the embodiments, the reliability of the connection structure between the injection molded member 1 and the vacuum-molded member 2 can be further improved.

A same mounting protrusion 21 may include two limiting portions 2111 arranged oppositely along the direction X, or the same mounting protrusion 21 may include two limiting portions 2111 arranged oppositely along the direction Y.

In other embodiments, the same mounting protrusion 21 may include two limiting portions 2111 arranged oppositely along the direction X, and the same mounting protrusion 21 may also include two limiting portions 2111 arranged oppositely along the direction Y.

In some embodiments, the limiting portion 2111 has a recessed structure or a protruding structure. The two structures can satisfy the above arrangement of "the limiting portion 2111 abuts against a top surface 1114 of the injection molded member 1".

In some embodiments, referring to FIG. 14, if the limiting portion 2111 has a protruding structure, the surface of the limiting portion 2111 is in a shape of a hemispherical surface. Through the arrangement, when the user assembles the injection molded member 1 and the vacuum-molded member 2, the inner side wall 1113 of the injection molded member 1 for defining the first mounting hole 111b and the limiting portion 2111 can slide relatively smoothly relative to each other, thereby facilitating the user to assemble the injection molded member 1 and the vacuum-molded member 2 more smoothly. Similarly, through the arrangement, when the user disassembles the injection molded member 1 and the vacuum-molded member 2, the inner side wall 1113 of the injection molded member 1 for defining the first mounting hole 111b and the limiting portion 2111 can slide relatively smoothly relative to each other, thereby facilitating the user to disassemble the injection molded member 1 and the vacuum-molded member 2 more smoothly.

In some embodiments, referring to FIG. 14, an area of a cross section of the mounting protrusion 21 perpendicular to a protruding direction (direction Z) of the mounting protrusion 21 gradually decreases along the protruding direction (direction Z). Under this arrangement, the outer side wall 211 of the mounting protrusion 21 serves as a guide slope, and when the inner side wall 1113 of the injection molded member 1 for defining the first mounting hole 111b abuts against the outer side wall 211 of the mounting protrusion 21, the outer side wall 211 of the mounting protrusion 21 may guide the injection molded member 1 to approach the vacuum-molded member 2 to a correct mounting position.

In some embodiments, referring to FIG. 14, the mounting protrusion 21 is provided with a third through hole 21a arranged along the protruding direction (direction Z) of the mounting protrusion 21. The third through hole 21a serves as a pressure relief hole. The third through hole 21a is used for electrolyte of the battery cell 201 in a thermal runaway state to pass through, so as to reduce a possibility of explosion inside the battery cell 201 due to incapability to release the electrolyte quickly.

In some embodiments, referring to FIG. 14, the vacuum-molded member 2 includes a second body 22, the second body 22 is provided with a first mounting groove 221, and one part of a structure of the injection molded member 1 is mounted in the first mounting groove 221. Under this arrangement, an assembly structure of the vacuum-molded member 2 and the injection molded member 1 is relatively compact, a dimension of the CCS assembly 10 along the direction Z is smaller, and the CCS assembly 10 occupies less space in the battery pack. Correspondingly, a volume of the cell assembly 20 can be designed to be larger, and the cell assembly 20 can store more electrical energy.

The first mounting groove 221 includes a first groove region 221a and a second groove region 221b, the first groove region 221a is configured to mount the first part 111, and the second groove region 221b is configured to mount part of the structure of the second part 112.

In addition, the same first mounting groove 221 may include two second groove regions 221b. In detail, the second groove regions 221b are arranged on two sides of the first groove region 221a along the direction (direction Y) perpendicular to the length direction (direction X) of the wiring harness 4. The second groove region 221b located on one side of the first groove region 221a and the second groove region 221b located on the other side of the first groove region 221a are misaligned along the length direction (direction X) of the wiring harness 4. A shape of one second groove region 221b matches the shape of the second part 112 connected to the first end 1111, and the shape of the other second groove region 221b matches the shape of the second part 112 connected to the second end 1112, that is, the first mounting groove 221 has a better fool-proof function regarding assembly, which reduces a possibility of incorrect mounting of the injection molded member 1 on the vacuum-molded member 2, thereby improving operational reliability of the CCS assembly 10 and the battery pack.

In some embodiments, an inner surface of the first mounting groove 221 is bonded or clamped to the injection molded member 1.

In some embodiments, referring to FIG. 14, the second body 22 is further provided with a second mounting groove 222, at least part of the structure of the electrical connection plate 3 is mounted in the second mounting groove 222, a space defined by the second mounting groove 222 is in communication with a space defined by the first mounting groove 221, and the other part of the structure of the injection molded member 1 is located in the second mounting groove 222, so that the structure of the injection molded member 1 located in the second mounting groove 222 is directly or indirectly connected to the electrical connection plate 3.

The second part 112 of the injection molded member 1 extends from the second groove region 221b of the first mounting groove 221 to the second mounting groove 222.

In some embodiments, the vacuum-molded member 2 is located between the injection molded member 1 and the cell assembly 20. Correspondingly, the electrical connection plate 3 is located on a side of the vacuum-molded member 2 facing away from the cell assembly 20, so as to meet a requirement of the injection molded member 1 and the wiring harness 4 and the electrical connection plate 3 that are connected to the injection molded member 1 to avoid the cell assembly 20.

In other embodiments, at least part of the structure of the injection molded member 1 may alternatively be located on a side of the vacuum-molded member 2 facing the cell assembly 20. For example, the first body 11 is located on the side of the vacuum-molded member 2 facing the cell assembly 20, and the buckle 12 is located on a side of the first body 11 facing away from the cell assembly 20, or the buckle 12 is located on a side of the first body 11 facing the cell assembly 20. Further, the buckle 12 may be located between the first body 11 and the vacuum-molded member 2, and the electrical connection plate 3 and the wiring harness 4 are both located on the side of the vacuum-molded member 2 facing the cell assembly 20. Under this arrangement, the vacuum-molded member 2 is not required to be provided with a fourth through hole 222a for the electrode structure of the cell assembly 20 to pass through, and it is simpler and easier to manufacture the structure of the vacuum-molded member 2. Next, the electrical connection plate 3 is closer to the main structure of the cell assembly 20, a dimension of the electrode structure of the battery cell 201 of the cell assembly 20 along the direction Z is shorter, the saved space can make the volume of the main structure of the battery cell 201 larger, and the battery cell 201 can store more electrical energy. Alternatively, the buckle 12 may pass through the vacuum-molded member 2, so that part of the structure of the buckle 12 is located on the side of the vacuum-molded member 2 facing away from the cell assembly 20, and the electrical connection plate 3 and the wiring harness 4 are both located on the side of the vacuum-molded member 2 facing away from the cell assembly 20. This arrangement facilitates the user to replace the electrical connection plate 3 and the wiring harness 4.

In some embodiments, a surface of the first body 11 facing the cell assembly 20 (a bottom surface of the first body 11) is flush with a surface of the vacuum-molded member 2 facing the cell assembly 20 (a bottom surface of the vacuum-molded member 2).

In some embodiments, the surface of the first body 11 facing the cell assembly 20 (the bottom surface of the first body 11) is closer to the cell assembly 20 than the surface of the vacuum-molded member 2 facing the cell assembly 20 (the bottom surface of the vacuum-molded member 2). Under this arrangement, the vacuum-molded member 2 can avoid part of the structure of the cell assembly 20.

In some embodiments, the surface of the vacuum-molded member 2 facing the cell assembly 20 (the bottom surface of the vacuum-molded member 2) is closer to the cell assembly 20 than the surface of the first body 11 facing the cell assembly 20 (the bottom surface of the first body 11). Under this arrangement, the first body 11 can avoid part of the structure of the cell assembly 20.

Some embodiments of the present disclosure further provide a manufacturing method. The manufacturing method may be used to manufacturing the first battery pack described above, and the manufacturing method may also be used to manufacturing the second battery pack described above. The method includes:
step S1: assembling all injection molded members 1 simultaneously to a vacuum-molded member 2;
step S2: assembling all electrical connection plates 3 simultaneously to the vacuum-molded member 2;
step S3: assembling wiring harnesses 4 to the injection molded members 1;
step S4: simultaneously hot riveting all the injection molded members 1 and the corresponding electrical connection plates 3;
step S5: simultaneously welding all the electrical connection plates 3 and the corresponding wiring harnesses 4 by laser welding or ultrasonic welding; and
step S6: simultaneously welding all the electrical connection plates 3 and corresponding temperature sensors by laser welding or ultrasonic welding.

The manufacturing method provided in the embodiments of the present disclosure has high efficiency and can manufacture more battery packs per unit time.

In some embodiments, the order of step S1 and step S2 is not limited in the embodiments of the present disclosure. Step S1 may be completed first, followed by step S2, or step S2 may be completed first, followed by step S1, or step S1 and step S2 may be completed at the same time.

In some embodiments, the order of step S3 and step S4 is not limited in the embodiments of the present disclosure. Step S3 may be completed first, followed by step S4, or step S4 may be completed first, followed by step S3. In addition, step S3 and step S4 may be completed after completion of step S1 and step S2.

In some embodiments, the order of step S5 and step S6 is not limited in the embodiments of the present disclosure. Step S5 may be completed first, followed by step S6, or step S6 may be completed first, followed by step S5. In addition, step S5 and step S6 may be completed after completion of step S3 and step S4.

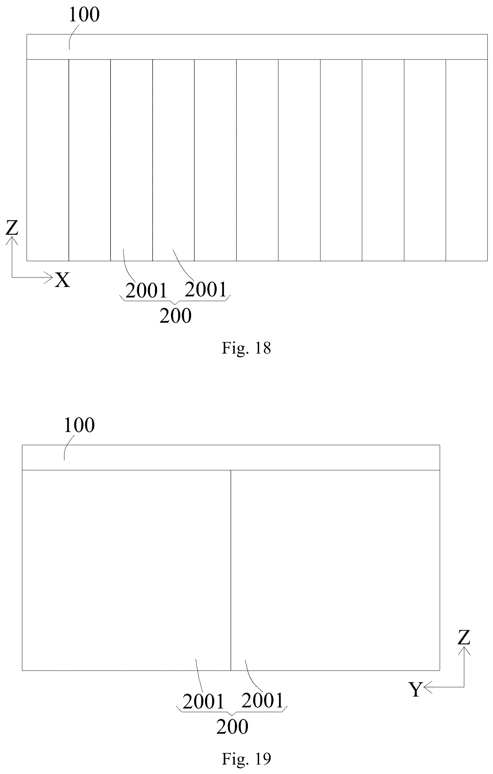

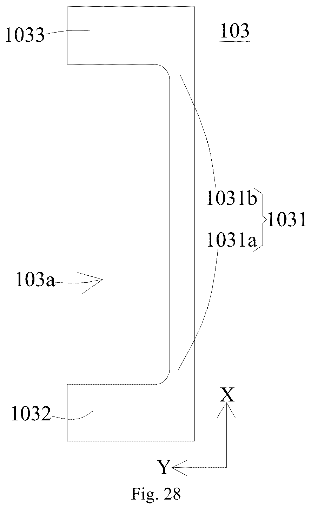

In a third aspect, some embodiments of the present disclosure provide a third battery pack (FIG. 18 to FIG. 30). Referring to FIG. 18, the battery pack includes a CCS assembly 100 and a cell assembly 200 connected to each other. The cell assembly 200 includes at least two battery cells 2001. The at least two battery cells 2001 are arranged along a length direction (direction X) of the CCS assembly 100. Referring to FIG. 19, at least two columns of battery cells 2001 are arranged along a width direction (direction Y) of the CCS assembly 100.

The CCS assembly 100 is configured to electrically connect a plurality of battery cells 2001 in series or in parallel. The CCS assembly 100 can further collect electrical signals of the battery cell 2001 in real time and collect temperature signals of an electrical connector between two battery cells 2001.

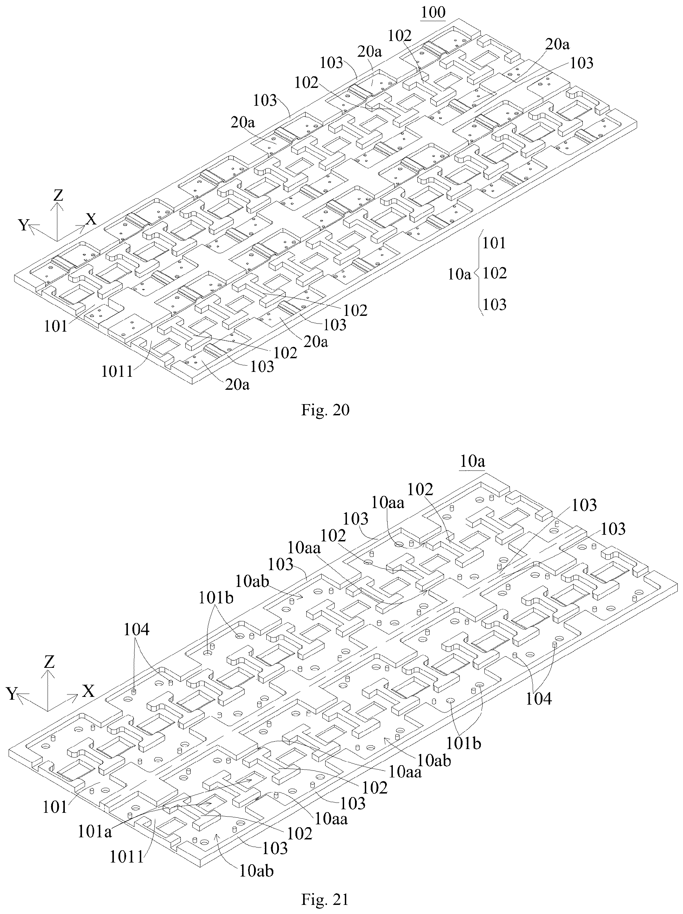

In a fourth aspect, some embodiments of the present disclosure provide a CCS assembly 100. Referring to FIG. 20, the CCS assembly 100 includes a wiring harness separator 10a, a plurality of electrical connectors 20a, a plurality of wiring harnesses (not shown), and a plurality of temperature sensors (not shown). The wiring harness separator 10a is provided with two sides arranged oppositely along its own thickness direction (direction Z), one side is used to mount the electrical connector 20a, the wiring harness, and the temperature sensor, and the other side is used to mount the cell assembly 200 as shown in FIG. 18 to FIG. 19, so that the wiring harness and the cell assembly 200 are separated by the wiring harness separator 10a and the temperature sensor and the cell assembly 200 are separated by the wiring harness separator 10a.

Referring to FIG. 21 to FIG. 22, the wiring harness separator 10a is provided with a through hole 101b, an electrode structure (not shown) of each battery cell 2001 of the cell assembly 200 may pass through the through hole 101b, so that the electrode structure of the battery cell 2001 may be connected (welded and electrically connected) to the electrical connector 20a as shown in FIG. 20.

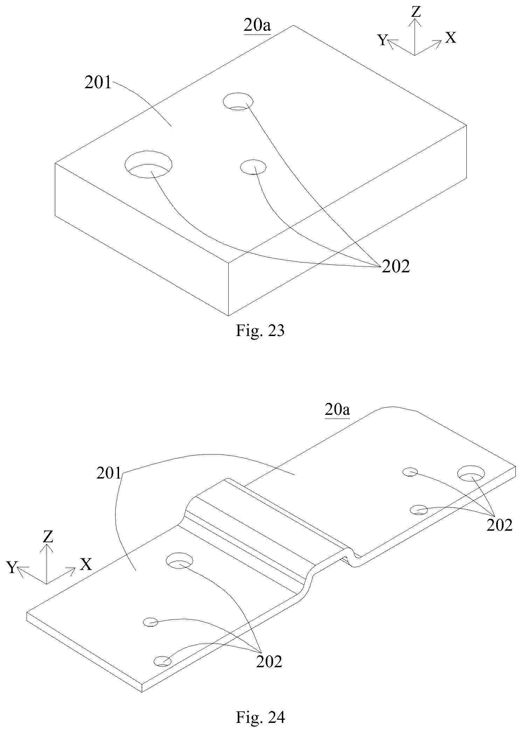

Referring to FIG. 23 to FIG. 24, the electrical connector 20a includes a connecting portion 21, and the connecting portion 21 is configured to be welded to the electrode structure (e.g., a positive electrode structure or a negative electrode structure) of the battery cell 2001. Each battery cell 2001 includes a positive electrode structure (not shown) and a negative electrode structure (not shown). The positive electrode structure is connected to the connecting portion 21 of one electrical connector 20a, and the negative electrode structure is connected to the connecting portion 21 of another electrical connector 20a. As shown in FIG. 23, part of the electrical connectors 20a include a single connecting portion 201. The connecting portion 201 is configured to be connected to the positive electrode structure of the battery cell 2001 arranged first in an arrangement order along the direction X. As shown in FIG. 24, part of the electrical connectors 20a include two electrical connecting portions 201. One electrical connecting portion 201 is configured to be connected to the negative electrode structure of the battery cell 2001 arranged first in an arrangement order along the direction X, and the other electrical connecting portion 201 is configured to be connected to the positive electrode structure of the battery cell 2001 arranged second in the arrangement order along the direction X. By analogy, the battery cells 2001 arranged along the direction X are electrically connected in series through a plurality of electrical connector 20a.

Referring to FIG. 24, each electrical connecting portion 201 of each electrical connector 20a is further provided with at least three second mounting holes 202. At least one second mounting hole 202 is penetrated by the electrode structure (not shown) of the battery cell 2001 so that the electrical connecting portion 201 is connected (welded and electrically connected) to the electrode structure of the battery cell 2001. At least one second mounting hole 202 is configured to be penetrated by the limiting post 104 of the wiring harness separator 10a so that the electrical connecting portion 201 is connected (connected by interference fit or hot riveted) to the wiring harness separator 10a. At least one second mounting hole 202 is configured to be penetrated by the wiring harness so that the electrical connecting portion 201 is electrically connected to the wiring harness, so that the wiring harness can collect current signals of the electrical connecting portion 201.

The electrical connector 20a is made of aluminum, copper, or iron.

In a fifth aspect, some embodiments of the present disclosure provide a wiring harness separator. Referring to FIG. 21 to FIG. 22, the wiring harness separator 10a includes a substrate 101, I-shaped protrusions 102, and U-shaped protrusions 103. At least two I-shaped protrusions 102 protrude from a top wall 1011 of the substrate 101 along a thickness direction (direction Z) of the substrate 101. At least two U-shaped protrusions 103 protrude from the top wall 1011 of the substrate 101 along the thickness direction (direction Z) of the substrate 101. Through the above arrangement, regardless of distribution of the I-shaped protrusion 102 and the U-shaped protrusion 103 relative to the substrate 101, at least part of the structure of the I-shaped protrusion 102 and at least part of the structure of the U-shaped protrusion 103 can enhance bending strength of the substrate 101, to reduce a possibility of bending and deformation of the substrate 101 when subjected to a large external force and also reduce bending and deformation of the electrical connector 20a mounted on the wiring harness separator 10a, thereby reducing a possibility of a virtual electrical connection between the electrical connector 20a and the battery cell 2001 and reducing a possibility of electric sparks generated by the connection structure between the electrical connector 20a and the battery cell 2001. Therefore, in the embodiments of the present disclosure, the structural arrangement of the wiring harness separator 10a can improve operational reliability of the electrical connection between the electrical connector 20a and the battery cell 2001 and improve safety of the battery pack.

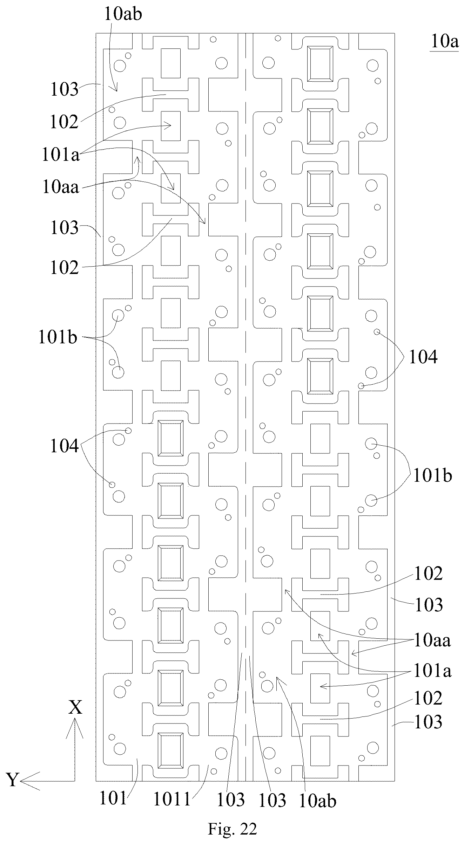

Referring to FIG. 21 and FIG. 22, the I-shaped protrusion 102, the U-shaped protrusion 103, and the substrate 101 define a first receiving groove 10aa, and the first receiving groove 10aa is configured to mount a wiring harness (not shown). Referring to FIG. 21 and FIG. 22, the U-shaped protrusion 103 and the substrate 101 define a second receiving groove 10ab, and the second receiving groove 10ab is configured to mount the electrical connector 20a as shown in FIG. 20. The first receiving groove 10aa is in communication with the second receiving groove 10ab, so that the wiring harness is connected to the electrical connector 20a. That is, the I-shaped protrusion 102 and the U-shaped protrusion 103 in the embodiments of the present disclosure are configured to improve the bending strength of the substrate 101 and are further configured to serve as a structure for forming the first receiving groove 10aa. The U-shaped protrusion 103 in the embodiments of the present disclosure is configured to improve the bending strength of the substrate 101 and is further configured to serve as a structure for forming the second receiving groove 10ab. Therefore, the wiring harness separator 10a in the embodiments of the present disclosure achieves two functions simultaneously by using a same structure. Compared with the wiring harness separator in the prior art that includes a structure for improving bending strength and a structure for defining a mounting groove respectively, the wiring harness separator 10a in the embodiments of the present disclosure has a higher degree of structural compactness. The wiring harness separator 10a with a higher degree of structural compactness occupies less space in the battery pack, so that the wiring harness separator 10a can mount more electrical connectors 20a, wiring harnesses, and other parts in the battery pack.

In other embodiments, two U-shaped protrusions 103 and the substrate 101 may alternatively define a small number of first receiving grooves 10aa.

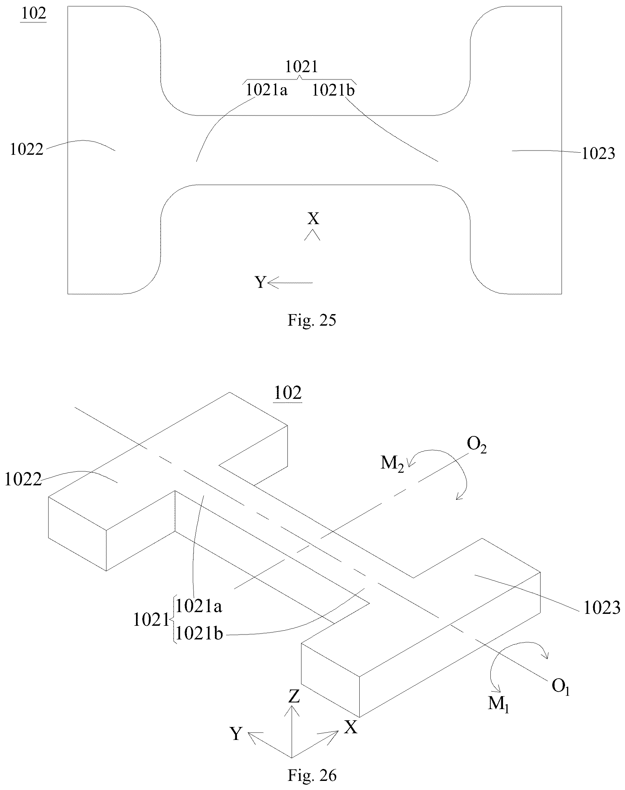

In some embodiments, referring to FIG. 25 to FIG. 26, the I-shaped protrusion 102 includes a first structural section 1021, a second structural section 1022, and a third structural section 1023, the first structural section 1021 includes a first end portion 1021a and a second end portion 1021b arranged oppositely, the first end portion 1021a is connected to the second structural section 1022, the second end portion 1021b is connected to the third structural section 1023, the first structural section 1021 is arranged along a width direction (direction Y) of the substrate 101, and the second structural section 1022 and the third structural section 1023 are both arranged along a length direction (direction X) of the substrate 101. Under this arrangement, the second structural section 1022 and the third structural section 1023 can improve bending strength of the substrate 10 to resist a bending moment M₁ about an axis O₁. The first structural section 1021 can improve bending strength of the substrate 10 to resist a bending moment M₂ about an axis O₂. Therefore, through the arrangement in the embodiments of the present disclosure, the operational reliability of the electrical connection between the electrical connector 20a and the battery cell 2001 can be better improved, and the safety of the battery pack can be better improved.

The axis O₁ may be considered as a center line of the second structural section 1022 and the third structural section 1023 along the direction Y, and the axis O₂ may be considered as a center line of the first structural section 1021 along the direction X.

In other embodiments (not shown), the first structural section 1021 may be arranged along the length direction (direction X) of the substrate 101, and both the second structural section 1022 and the third structural section 1023 may be arranged along the width direction (direction Y) of the substrate 101.

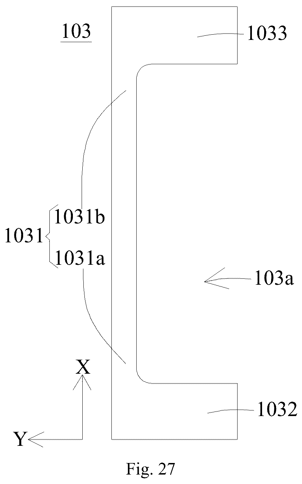

In some embodiments, referring to FIG. 27, FIG. 28, and FIG. 29, the U-shaped protrusion 103 includes a fourth structural section 1031, a fifth structural section 1032, and a sixth structural section 1033, the fourth structural section 1031 includes a third end portion 1031a and a fourth end portion 1031b arranged oppositely, the third end portion 1031a is connected to the fifth structural section 1032, the fourth end portion 1031b is connected to the sixth structural section 1033, the fourth structural section 1031 is arranged along the length direction (direction X) of the substrate 101, and the fifth structural section 1032 and the sixth structural section 1033 are both arranged along the width direction (direction Y) of the substrate 101. Under this arrangement, the fifth structural section 1032 and the sixth structural section 1033 can improve bending strength of the substrate 10 to resist a bending moment M₄ about an axis O₄. The fourth structural section 1031 can improve bending strength of the substrate 10 to resist a bending moment M₃ about an axis O₃. Therefore, through the arrangement in the embodiments of the present disclosure, the operational reliability of the electrical connection between the electrical connector 20a and the battery cell 2001 can be better improved, and the safety of the battery pack can be better improved.

The axis O₃ may be considered as a center line of the fourth structural section 1031 along the direction Y, and the axis O₄ may be considered as a center line of the fifth structural section 1032 and the sixth structural section 1033 along the direction X.

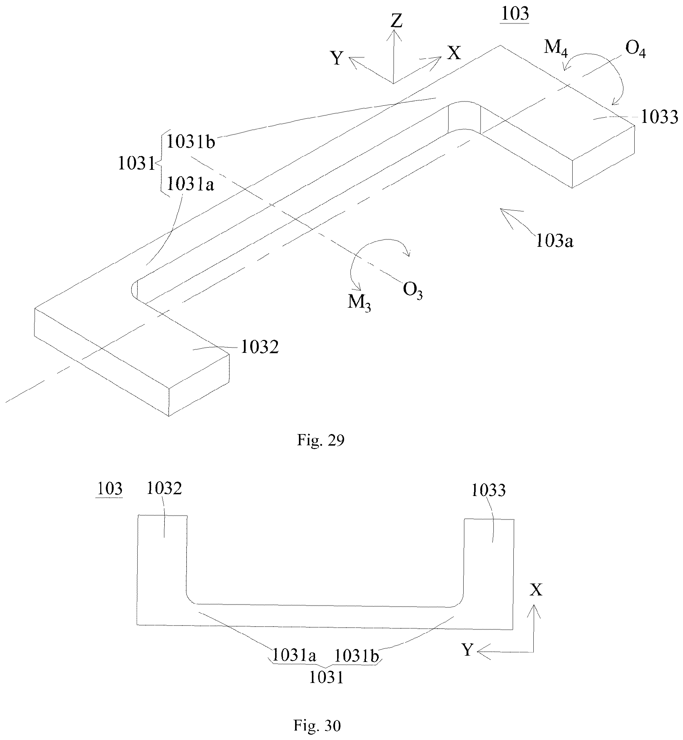

In other embodiments, referring to FIG. 30, the fourth structural section 1031 may be arranged along the width direction (direction Y) of the substrate 101, and both the fifth structural section 1032 and the sixth structural section 1033 may be arranged along the length direction (direction X) of the substrate 101.

In some embodiments, the second structural section 1022 and the substrate 101 define the first receiving groove 10aa with any structure of the U-shaped protrusion 103. For example, the second structural section 1022 and the substrate 101 define the first receiving groove 10aa with the fifth structural section 1032 or the sixth structural section 1033 of the U-shaped protrusion 103. The arrangement in the embodiments achieves the effect of a relatively higher degree of structural compactness of the wiring harness separator 10a. Details are not described herein again.

If the second structural section 1022 and the substrate 101 define the first receiving groove 10aa with the fifth structural section 1032, a dimension of the second structural section 1022 along the direction X may be the same as or different from a dimension of the fifth structural section 1032 along the direction X. If the second structural section 1022 and the substrate 101 define the first receiving groove 10aa with the sixth structural section 1033, the dimension of the second structural section 1022 along the direction X may be the same as or different from a dimension of the sixth structural section 1033 along the direction X.

In other embodiments (not shown), the second structural section 1022 and the substrate 101 define the first receiving groove 10aa with the fourth structural section 1031 of the U-shaped protrusion 103.

In some embodiments, the third structural section 1023 and the substrate 101 define the first receiving groove 10aa with any structure of the U-shaped protrusion 103. For example, the third structural section 1023 and the substrate 101 define the first receiving groove 10aa with the fifth structural section 1032 or the sixth structural section 1033 of the U-shaped protrusion 103. The arrangement in the embodiments achieves the effect of a relatively higher degree of structural compactness of the wiring harness separator 10a. Details are not described herein again.

If the third structural section 1023 and the substrate 101 define the first receiving groove 10aa with the fifth structural section 1032, a dimension of the third structural section 1023 along the direction X may be the same as or different from a dimension of the fifth structural section 1032 along the direction X. If the third structural section 1023 and the substrate 101 define the first receiving groove 10aa with the sixth structural section 1033, the dimension of the third structural section 1023 along the direction X may be the same as or different from a dimension of the sixth structural section 1033 along the direction X.

In other embodiments (not shown), the third structural section 1023 and the substrate 101 define the first receiving groove 10aa with the fourth structural section 1031 of the U-shaped protrusion 103.

Since the wiring harness separator 10a in the embodiments of the present disclosure may be provided with a plurality of first receiving grooves 10aa, the wiring harness separator 10a may include any one of the above structures for defining the first receiving groove 10aa.

In some embodiments, the second structural section 1022 is located between the first structural section 1021 and the second receiving groove 10ab.

Since the second receiving groove 10ab is configured to mount the electrical connector 20a, part of the wiring harnesses may extend from the first receiving groove 10aa into the second receiving groove 10ab and be connected to the corresponding electrical connection plates 20a, but other wiring harnesses may still continuously extend along a direction parallel to the direction X. That is, the other wiring harnesses may pass through sides of the second receiving groove 10ab and the electrical connector 20a. The second structural section 1022 located between the first structural section 1021 and the second receiving groove 10ab may form a limiting effect on other wiring harnesses along a direction opposite to the direction Y, so that the other wiring harnesses can be better placed on the wiring harness separator 10a along the direction parallel to the direction X.

In some embodiments, the third structural section 1023 is located between the first structural section 1021 and the second receiving groove 10ab.

Since the second receiving groove 10ab is configured to mount the electrical connector 20a, part of the wiring harnesses may extend from the first receiving groove 10aa into the second receiving groove 10ab and be connected to the corresponding electrical connection plates 20a, but other wiring harnesses may still continuously extend along the direction parallel to the direction X. That is, the other wiring harnesses may pass through sides of the second receiving groove 10ab and the electrical connector 20a. The third structural section 1023 located between the first structural section 1021 and the second receiving groove 10ab may form a limiting effect on other wiring harnesses along the direction opposite to the direction Y, so that the other wiring harnesses can be better placed on the wiring harness separator 10a along the direction parallel to the direction X.

In some embodiments, at least two I-shaped protrusions 102 are arranged at intervals along the length direction (direction X) of the substrate 101, and an interval space may be formed between two I-shaped protrusions 102. The interval space may avoid other structures in the battery pack, so that the battery pack has a relatively higher degree of structural compactness, thereby reducing the volume of the battery pack. Next, through the arrangement in the embodiments, at least two first receiving grooves 10aa distributed along the length direction X may also be formed, so that the wiring harness is arranged on the wiring harness separator 10a along the length direction X.

In some embodiments, if at least two battery cells 2001 are distributed along the length direction (direction X) of the substrate 101, the substrate 101 may be provided with at least two pressure relief holes 101a, and a single pressure relief hole 101a is provided between every two I-shaped protrusions 102 arranged at intervals along the length direction (direction X) of the substrate 101. The pressure relief hole 101a is used for electrolyte of the battery cell 2001 in a thermal runaway state to pass through, so as to reduce a possibility of explosion inside the battery cell 2001 due to incapability to release the electrolyte quickly.

The wiring harness separator 10a in the embodiments may be applied to the battery cells 2001 arranged in a single column.

In some embodiments, on the basis of the above arrangement of the battery cells 2001 and the pressure relief holes 101a, if at least two columns of battery cells 2001 are distributed along the width direction (direction Y) relative to the substrate 101 and at least two battery cells 2001 in each column of battery cells 2001 are distributed along the length direction (direction X) relative to the substrate 101, the substrate 101 may be provided with at least two columns of pressure relief holes 101a arranged at intervals along the width direction (direction Y) of the substrate 101. Each column of pressure relief holes 101a includes at least two pressure relief holes 101a arranged at intervals along the length direction (direction X) of the substrate 101.

The wiring harness separator 10a in the embodiments may be applied to at least two columns of battery cells 2001.

In some embodiments, at least two U-shaped protrusions 103 are distributed along the length direction of the substrate 101, and the structure is configured to form a first receiving groove 10aa and a second receiving groove 10ab distributed along the length direction X, so that the wiring harness is arranged on the wiring harness separator 10a along the length direction X and at least two electrical connectors 20a are distributed on the wiring harness separator 10a along the length direction X.

In some embodiments, the sixth structural section 1033 of one of each two adjacent U-shaped protrusions 103 is connected to the fifth structural section 1032 of the other one. The arrangement in the embodiments is more conducive to improving the bending strength of the substrate 101.

In other embodiments (not shown), the sixth structural section 1033 of one of each two adjacent U-shaped protrusions 103 and the fifth structural section 1032 of the other one may be arranged at intervals.

In some embodiments, the wiring harness separator 10a includes at least two columns of U-shaped protrusions 103 distributed along the width direction (direction Y) of the substrate 101, and each column of U-shaped protrusions 103 includes at least two U-shaped protrusions 103 distributed along the length direction (direction X) of the substrate 101. The arrangement in the embodiments is more conducive to improving the bending strength of the substrate 101.

In some embodiments, the U-shaped protrusions 103 define an opening 103a. Some two columns of U-shaped protrusions 103 are arranged at intervals along the width direction (direction Y) of the substrate 101, and respective openings 103a are oriented opposite to each other. In detail, one opening 103a is oriented along the direction Y, the other opening is oriented in the direction opposite to the direction Y, and the two openings 103a are oriented towards each other.

In some embodiments, the U-shaped protrusions 103 define an opening 103a. Some two columns of U-shaped protrusions 103 are connected along the width direction of the substrate 101, and respective openings 103a are oriented away from each other. In detail, one opening 103a is oriented along the direction Y, the other opening 103a is oriented in the direction opposite to the direction Y, and the two openings 103a are oriented away from each other.

In some embodiments, the wiring harness separator 10a further includes a limiting post 104, the limiting post 104 protrudes from the top wall 1011 of the substrate 101, at least part of a structure of the limiting post 104 is located in the second receiving groove 10ab, and the limiting post 104 is configured to be hot riveted with the electrical connector 20a.

In some embodiments, the wiring harness separator 10a in the embodiments of the present disclosure is integrally formed using an injection molding process.

## Claims

1. A battery pack, comprising:
a cells contact system (CCS) assembly comprising an injection molded member, a vacuum-molded member, an electrical connection plate, and a wiring harness, wherein
the injection molded member comprises a first body and a buckle connected to each other, the first body is connected to the vacuum-molded member, the buckle is clamped to the wiring harness, the electrical connection plate is connected to the first body, the electrical connection plate is connected to the vacuum-molded member, and the wiring harness is connected to the electrical connection plate, and
a cell assembly comprising at least two single cells, and the at least two single cells are electrically connected to the electrical connection plate.

2. The battery pack according to claim 1, wherein
the injection molded member further comprise a first reinforcement portion, and the first reinforcement portion is respectively connected to the first body and at least part of the buckle, and
the first reinforcement portion comprises a first section and a second section connected to each other, the first section extends along a length direction of the wiring harness, the second section is arranged along a direction perpendicular to the length direction of the wiring harness, the first section and the second section both have a plate-like structure, and the first section blocks the wiring harness.

3. The battery pack according to claim 2, wherein the first section is provided with a first through hole,
the first body is provided with a second through hole, the second through hole is in communication with the first through hole, and
a penetration direction of the first through hole is perpendicular to the first section, and a penetration direction of the second through hole is perpendicular to the penetration direction of the first through hole.

4. The battery pack according to claim 1, wherein
the vacuum-molded member comprises a mounting protrusion, the first body is provided with a first mounting hole, and the mounting protrusion is arranged to pass through the first mounting hole, and
an inner side wall of the first body for defining the first mounting hole is bonded or clamped to an outer side wall of the mounting protrusion.

5. The battery pack according to claim 4, wherein
an area of a cross section of the mounting protrusion perpendicular to a protruding direction of the mounting protrusion gradually decreases along the protruding direction, and
the inner side wall of the first body defining the first mounting hole is in a shape of a track, and the outer side wall of the mounting protrusion is in a shape of a track.

6. The battery pack according to claim 4, wherein
the outer side wall of the mounting protrusion further comprises an limiting portion having an annular shape, the limiting portion abuts against a top surface of the first body to prevent detachment of the mounting protrusion from the first mounting hole, and
the limiting portion has a protruding structure or a recessed structure.

7. The battery pack according to claim 4, wherein
the mounting protrusion is provided with a third through hole arranged along a protruding direction of the mounting protrusion.

8. The battery pack according to claim 1, wherein
the vacuum-molded member comprises a second body, the second body is provided with a first mounting groove, and part of the first body is mounted in the first mounting groove, and
an inner surface of the first mounting groove is bonded or clamped to the first body.

9. The battery pack according to claim 8, wherein
the first mounting groove comprises a first groove region and a second groove region, the second groove region is provided at two sides of the first groove region along a direction perpendicular to a length direction of the wiring harness, and
a second groove region located at one side of the first groove region and a second groove region located at the other side of the first groove region are misaligned along the length direction of the wiring harness.

10. The battery pack according to claim 9, wherein
the second body is further provided with a second mounting groove, at least part of the electrical connection plate is mounted in the second mounting groove, a space defined by the second mounting groove is in communication with a space defined by the first mounting groove, and
another part of the first body is located in the second mounting groove, so that the part of the first body located in the second mounting groove is directly or indirectly connected to the electrical connection plate.

11. The battery pack according to claim 1, wherein the injection molded member comprises a second reinforcement portion respectively connected to the first body and the vacuum-molded member,
the second reinforcement portion extends along a direction perpendicular to a length direction of the wiring harness, and
the second reinforcement portion is provided at two opposite sides of the first body along the length direction of the wiring harness.

12. The battery pack according to claim 11, wherein the second reinforcement portion located at one side of the first body and the second reinforcement portion located at the other side of the first body are misaligned along the direction perpendicular to the length direction of the wiring harness.

13. The battery pack according to claim 11, wherein
the first body is provided with a sixth through hole, the sixth through hole is provided between the second reinforcement portion located at one side of the first body and the second reinforcement portion located at the other side of the first body, and
the sixth through hole is in a shape of a rectangle or in a shape of a rectangle having rounded corners.

14. The battery pack according to claim 11, wherein
a first connecting hole is arranged at a junction between the first body and the second reinforcement portion, and
the first connecting hole is adapted for part of the vacuum-molded member to pass through so that the injection molded member is positioned relative to the vacuum-molded member.

15. A method for manufacturing a battery pack, wherein the battery pack comprises:
a cells contact system assembly comprising an injection molded member; a vacuum-molded member; an electrical connection plate; and a wiring harness, wherein
the injection molded member comprises a first body and a buckle connected to each other, the first body is connected to the vacuum-molded member, the buckle is clamped to the wiring harness, the electrical connection plate is connected to the first body, the electrical connection plate is connected to the vacuum-molded member, and the wiring harness is connected to the electrical connection plate, and
a cell assembly comprising at least two single cells, and the at least two single cells are electrically connected to the electrical connection plate, and
wherein the method comprises:
step S1: assembling all injection molded members simultaneously to the vacuum-molded member;
step S2: assembling all electrical connection plates simultaneously to the vacuum-molded member;
step S3: assembling the wiring harness to the injection molded members;
step S4: simultaneously hot riveting all the injection molded members and corresponding electrical connection plates;
step S5: simultaneously welding all electrical connection plates and corresponding wiring harness by laser welding or ultrasonic welding; and
step S6: simultaneously welding all electrical connection plates and corresponding temperature sensors by laser welding or ultrasonic welding.
